# EUROPÄISCHE PATENTANMELDUNG

(11) **EP 2 511 659 A1**
(43) Veröffentlichungstag der Anmeldung: **17.10.2012**
(21) Anmeldenummer: 11162509.1
(22) Anmeldetag: 14.04.2011
(51) Int. Cl.: G01C 15/00, B64C 39/02, G01S 17/42, G05D 1/02

(54) **Geodätisches Markierungssystem zur Markierung von Zielpunkten**

(71) Anmelder: Hexagon Technology Center GmbH, 9435 Heerbrugg (CH)
(72) Erfinder: Metzler, Bernhard, A-6850, Dornbirn (AT)
(74) Vertreter: Kaminski Harmann

(57) **Zusammenfassung**

Die Erfindung betrifft ein geodätisches Markiersystem (1) zur Markierung eines bekannten Zielpunkts (5) mit einer auto-mobilen, unbemannten, fernsteuerbaren Zieleinheit (10), und mit einer geodätischen Positionsbestimmungsanordnung (20) zur äusseren Istpositionsbestimmung der Zieleinheit (10), wobei die Zieleinheit (10) derart ausgebildet ist, dass die Zieleinheit (10) zumindest vorübergehend weitestgehend positionsfest positionierbar ist. Des Weiteren trägt die Zieleinheit (10) eine Markiereinheit (15) zur Markierung des Zielpunkts (5), und das Markiersystem (1) weist eine Steuereinheit auf, wobei die Steuereinheit derart konfiguriert ist, dass in Abhängigkeit der äusseren Istposition (4) und einer bekannten Zielpunktposition des Zielpunkts (5,5a,5b) die Zieleinheit (10) in einer definierten Sollposition (6), relativ zur Zielpunktposition positionierbar ist. Weiters ist die Steuereinheit derart konfiguriert, dass unter Berücksichtigung der Istposition (4), der Sollposition (6) und einer definierten Markierrichtung (14) von der Markiereinheit (15) zum Zielpunkt (5) dieMarkiereinheit (15) zur Markierung des Zielpunkts (5) steuerbar ist, sodass der Zielpunkt (5) in der definierten Markierrichtung (14) mit geodätischer Genauigkeit markierbar ist.

## Beschreibung

Die Erfindung betrifft ein geodätisches Markiersystem mit einer Positionsbestimmungsanordnung, insbesondere einem Theodoliten, einer Totalstation oder einem GNSS-System, insbesondere mit einer GNSS-Referenzstation, und mit einer auto-mobilen Zieleinheit zur Markierung eines bekannten Zielpunkts nach dem Oberbegriff des Anspruchs 1, ein Verfahren zum Steuern eines Markiervorgangs mit einem erfindungsgemässen Markiersystem nach Anspruch 5, eine auto-mobile Zieleinheit nach Anspruch 9 für ein erfindungsgemässes Markiersystem und eine Markieranordnung nach Anspruch 13 für ein erfindungsgemässes Markiersystem.

Zum Vermessen eines oder insbesondere mehrerer Zielpunkte sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung gegebenenfalls noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem anzielbaren Modul z.B. einem Reflektor zur Definition der Messtrecke bzw. des Messpunktes. Diese Zielobjekte werden mittels eines Vermessungsgeräts angezielt, eine Richtung und eine Distanz zu den Objekten bestimmt und somit eine Position der Objekte abgeleitet.

In Analogie zu dieser Punktvermessung kann eine Markierung bereits bekannter Zielpunkte bzw. von Punkten, deren Position im Vorfeld eines Markiervorgangs definiert wurde, erfolgen. Im Gegensatz zur Punktvermessung sind in diesem Fall die Position bzw. die Koordinaten der zu markierenden Punkte bekannt und sollen markiert werden. Für einen solchen Markiervorgang wird üblicherweise ebenfalls ein Lotstock bzw. eine Vermessungsstange verwendet, die von einem Benutzer geführt und auf einem Zielpunkt positioniert wird. Der Benutzer kann sich hierfür auf Basis von durch das Vermessungsgerät generierten Positionsinformationen an die Zielposition des Zielpunktes herantasten, wobei der Vermessungsstab von dem Vermessungsgerät durch eine zweite Person oder durch einen dem Vermessungsgerät zugeordneten Automatismus automatisch angezielt wird. Ist der Zielpunkt erreicht, kann der Benutzer eine Markierung des Punktes vornehmen.

Moderne Vermessungsgeräte wie eine Totalstation für derartige Markier- und Vermessungsaufgaben verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert.

Aus dem Stand der Technik bekannte Totalstationen verfügen des Weiteren über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Fernbedieneinheit, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Zum Anvisieren bzw. Anzielen des zu vermessenden Zielpunkts weisen gattungsgemässe geodätische Vermessungsgeräte beispielsweise ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers oder der Fernbedieneinheit - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 197 107 22, der DE 199 267 06 oder der DE 199 495 80 bekannt.

Den vorgenannten Vermessungssystemen aus dem Stand der Technik ist gemeinsam, dass, gegebenenfalls auch unter Verwendung einer Kamera, die Zieleinheit bzw. ein mit der Zieleinheit versehener Vermessungsstab von einer stationären Positionsbestimmungseinheit wie beispielsweise einer Totalstation anvisiert oder beobachtet wird. Es wird jedoch keine automatisierte Führung eines Benutzers bzw. Operators, unter Verwendung der von der stationären Positionsbestimmungseinheit aufgenommenen Bilddaten, zu einem vorgesehenen Zielpunkt zwecks dessen Absteckung offenbart, so dass der Absteckungsprozess für einen Operator relativ mühsam und mit einem erheblichen Zeitaufwand verbunden ist, wenn eine genaue Absteckung des Zielpunkts gewährleistet werden soll.

Für eine Lösung dieses Problems wird in der US 7 222 021 bzw. der korrespondierenden EP 1 293 755 ein Vermessungssystem, in dieser Patentschrift bezeichnet als ein Bedienerleitsystem, vorgeschlagen, mit einer stationären Basisstation entsprechend einer stationären Positionsbestimmungseinheit, welche ausgestattet ist mit Abbildungsmitteln wie z.B. einer Kamera, und einer mobilen Station mit der Funktion einer mobilen Zieleinheit, welche ausgestattet ist mit Anzeigemitteln wie z.B. einem Display zum Darstellen einer aktuellen Position des Benutzers basierend auf gespeicherten Landschaftsbildern bzw. -daten und aktuellen Bildern, von der stationären Messeinheit aus gesehen. Es wird des Weiteren offenbart, wie ein Bediener mittels Korrelation zwischen den aktuell von der stationären Messstation aus gemessenen Positionsdaten, einschliesslich Kamerabild, für die mobile Station, gespeicherten Daten mit der vorgesehenen Position des Zielpunkts durch Markierung auf dem Display der Zieleinheit zum Zielpunkt geleitet werden kann, z.B. durch Richtungsanzeige mittels eines Pfeils auf dem Display.

Eine Vorrichtung zur weiteren Beschleunigung und Vereinfachung eines Vermessungs- oder Absteckverfahrens wird in der europäischen Patentanmeldung mit der Anmeldenummer 10177211.9 beschrieben. Darin wird eine Fernsteuereinheit mit einer Kamera zur Aufnahme eines Kamerabilds in einer definierten Aufnahmerichtung beschrieben, wobei mittels einer Positionsbestimmungseinheit und der Kamera die Bilddaten der Kamera in einem Koordinatensystem in räumlichen Bezug mit den Zielpunkten gebracht werden. Dies ermöglicht dem Operator ein gezielteres Ansteuern des Zielpunkts und reduziert damit die Dauer des Vermessungsvorgangs weiter. Jedoch verlangt diese Zielsuche vom Operator weiterhin ein aktives Suchen der Zielpunktposition und ein damit verbundenes, insbesondere mehrmaliges, Vergleichen der Zielpunktposition mit seiner aktuellen Position bzw. der Position des Vermessungsstabs.

Aufgabe der vorliegenden Erfindung ist es, ein Vermessungs- bzw. Markierungssystem mit zugehörigen Einheiten für das System sowie ein entsprechendes Verfahren bereitzustellen, mit welchen eine Markierung eines Zielpunkts schneller, einfacher und mit einem höheren Automatisierungsgrad, insbesondere in einem schwer mit einem Vermessungsstab zugänglichen Gelände, erfolgen kann. Eine spezielle Aufgabe der Erfindung ist es, eine Möglichkeit bereitzustellen, ein bei einem Markierungsprozess von einem Benutzer durchzuführendes visuelles Vergleichen seiner Position bzw. einer Position eines Vermessungsstabs mit einer Zielpunktposition vermeidbar zu machen.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein geodätisches Markiersystem zur Markierung eines bekannten Zielpunkts mit einer auto-mobilen, unbemannten, fernsteuerbaren Zieleinheit, insbesondere einem Fluggerät, und mit einer geodätischen Positionsbestimmungsanordnung zur äusseren Istpositionsbestimmung der Zieleinheit, wobei die Zieleinheit derart ausgebildet ist, dass die Zieleinheit zumindest vorübergehend weitestgehend positionsfest, insbesondere schwebend, positionierbar ist. Weiterhin trägt die Zieleinheit eine, insbesondere modulartig abnehmbare, Markiereinheit zur Markierung des Zielpunkts. Darüber hinaus weist das Markiersystem eine Steuereinheit auf, wobei die Steuereinheit derart konfiguriert ist, dass in Abhängigkeit der, insbesondere fortlaufend bestimmbaren, äusseren Istposition und einer bekannten Zielpunktposition des Zielpunkts die Zieleinheit in einer definierten Sollposition, insbesondere in einem definierten Toleranzbereich um die Sollposition, relativ zur Zielpunktposition, insbesondere fortlaufend, automatisch gesteuert positionierbar ist und dass unter Berücksichtigung der Istposition, der Sollposition und einer definierten Markierrichtung von der Markiereinheit zum Zielpunkt die Markiereinheit zur Markierung des Zielpunkts steuerbar ist, sodass der Zielpunkt in der definierten Markierrichtung mit geodätischer Genauigkeit markierbar ist.

Ein derartiges erfindungsgemässes Markiersystem kann eine Markierung von Zielpunkten so ermöglichen, dass die Positionierung der markierenden Zieleinheit völlig automatisch abläuft und damit kein iteratives Annähern eines Benutzers an einen vorgegebenen Zielpunkt erforderlich ist. Hierzu kann die Zieleinheit ferngesteuert z.B. mittels Funksignalen oder mittels Signalen, die kabelgebunden, via Infrarot oder via Bluetooth an die Zieleinheit übermittelt werden, zu einer definierten Position gesteuert werden. Als Zieleinheit kann beispielsweise ein geländegängiges Fahrzeug oder ein flugfähiges Fluggerät verwendet werden, welches jeweils entweder durch einen motorisierten Radantrieb oder durch eine gezielte Ansteuerung von ebenfalls motorgetriebenen Rotoren positionierbar ist, wobei das jeweilige Fahr- bzw. Flugzeug unbemannt und gleichzeitig, insbesondere ferngesteuert, mittels der vorgesehenen Motorisierung bewegbar ist.

Zur Steuerung der Zieleinheit bzw. zur Erzeugung von Steuersignalen zur Steuerung kann mit dem Markiersystem eine Position der Zieleinheit bestimmt werden. Hierfür ist eine Positionsbestimmungsanordnung vorgesehen. Diese Anordnung kann eine Totalstation, einen Thoedoliten, ein Tachymeter oder z.B. ein GNSS-System aufweisen, wobei jeweils ein mit der entsprechenden Anordnung korrespondierendes Modul zieleinheitsseitig angeordnet ist. Durch eine so erreichbare Interaktion zwischen einem zur Positionsbestimmung vorgesehenen Gerät und einer darauf abgestimmten Komponente kann eine Position der Zieleinheit exakt bestimmt und darüber hinaus die Position der Zieleinheit fortlaufend bzw. kontinuierlich verfolgt werden.

In Kenntnis einer bekannten Zielpunktposition des Zielpunkts kann auf Basis der aktuell bestimmten Zieleinheitsposition ein Positionsvergleich durchgeführt werden und/oder abhängig von den jeweiligen Positionen die Zieleinheit gesteuert werden. Aus diesen Informationen kann sich weiters eine Sollposition für die Zieleinheit ableiten lassen und diese Sollposition als Zielposition für die Zieleinheit definiert werden. Die Steuerung der Zieleinheit kann dann derart erfolgen, dass diese zu der Zielposition gesteuert und dort positioniert wird. Eine Positionierung der Zieleinheit kann so zumindest vorübergehend weitestgehend positionsfest erfolgen, d.h. die Zieleinheit kann unabhängig von äusseren Einflüssen über einen vorübergehenden Zeitraum hinweg eine ortsfeste Position schwankungsfrei halten. Dies kann insbesondere durch eine abgestimmte Steuerung der Zieleinheit erreicht werden.

Eine Feststellung der Position der Zieleinheit oder einer Abweichung aus einer vorgegebenen Position kann fortlaufend durch die mit der Zieleinheit in Kontakt stehende Positionsbestimmungsanordnung erfolgen. Dafür kann eine der Positionsbestimmungsanordnung zugeordnete Sendeeinheit Positionierungssignale bereitstellen, die von einem Empfänger an der Zieleinheit empfangen werden können. Weist diese Anordnung z.B. einen GNSS-Sender auf bzw. wird ein GNSS-System dafür genutzt die Position der Zieleinheit genau zu bestimmen, so kann die Zieleinheit einen GNSS-Empfänger aufweisen, mittels welchem eine Positionsinformation empfangen und daraus eine Position bestimmt werden kann. Ein hierfür gebräuchliches GNSS-System kann beispielsweise durch GPS oder GLONASS repräsentiert sein. Entsprechend kann an der Zieleinheit eine GNSS-Antenne angeordnet sein, um die dem jeweiligen System zugeordneten Signale empfangen zu können. Zusätzlich dazu kann eine GNSS-Referenzstation vorgesehen sein, welche ebenfalls zum Empfang von GNSS-Signalen ausgebildet ist und zudem Referenzdaten bzw. Korrekturdaten beispielsweise für eines der bekannten DGPS-, RTK- oder VRS-Verfahren zur Genauigkeitssteigerung für eine Positionsbestimmung zur Verfügung stellt. Eine für ein derartiges Referenzsystem angepasste Zieleinheit kann somit zusätzlich zum Empfang von Korrektursignalen ausgebildet sein und eine geodätische Positionsbestimmung unter Berücksichtigung dieser Signale durchführen.

Insbesondere kann die Istposition der Zieleinheit festgestellt werden, indem ein an der Zieleinheit angeordnetes Modul z.B. ein Reflektor von einem Vermessungsgerät, beispielsweise von einer Totalstation oder einem Theodoliten, anzielbar ist. Dabei kann die Position des Vermessungsgeräts z.B. dadurch bereits bekannt sein, dass ein Einmessvorgang vermessungsgeräteseitig durchgeführt wurde und das Gerät somit durch Anmessung bekannter Punkte eine Eigenpositionsbestimmung durchführen konnte. Wird nun von dieser Vermessungsstation ein Reflektor an der Zieleinheit angezielt, kann durch Bestimmung der Ausrichtung eines emittierten Messstrahls die Richtung zu der Zieleinheit bestimmt und anhand einer mittels des Messstrahls durchgeführten Entfernungsmessung eine Distanz zu der Zieleinheit festgestellt werden. Aus diesen Grössen kann die relative Position der Zieleinheit zum Vermessungsgerät eindeutig und exakt bestimmt und mit Kenntnis der Position des Vermessungsgeräts eine absolute, insbesondere geodätisch genaue, Positionierung der Zieleinheit abgeleitet werden. Auf Basis der so, insbesondere fortlaufend, bestimmten Position der Zieleinheit kann die Steuerung der Einheit durchgeführt werden. Dafür können aus den Positionsinformationen Steuerungsdaten gewonnen und mittels dieser die Zieleinheit zu einer definierten Sollposition gefahren bzw. geflogen werden.

Die Sollposition kann insbesondere aus den Koordinaten oder Positionsangaben eines Zielpunktes bestimmt werden. Repräsentiert dieser beispielsweise einen Bodenpunkt im Gelände kann der Bodenpunkt selbst als Zielpunkt definiert werden, welcher durch die als Fahrzeug ausgestaltete Zieleinheit angefahren werden kann. Zur Erleichterung einer Positionierung des Fahrzeugs kann hier ein Zielbereich um die Sollposition definiert werden, wobei der Zielpunkt als erreicht gilt, sobald das Fahrzeug bzw. die die Position des Fahrzeugs angebende Komponente in dem Zielbereich liegt. Ist die Zieleinheit als Fluggerät - beispielsweise Drohne - ausgebildet und soll die Sollposition schwebend eingenommen werden können, so kann wiederum eine Sollposition definiert werden, die sich beispielsweise zwischen zwei und zehn Metern senkrecht über dem Bodenpunkt oder in einem bestimmten Winkel, insbesondere innerhalb eines definierten Winkelbereichs, und Abstand zum Bodenpunkt befindet. Auch für diese Ausführung kann ein Ziel- bzw. Sollbereich, welcher eine definierte Positionstoleranz aufweist, um die Sollposition aufgespannt werden, wobei die Sollposition als erreicht gilt wenn das Fluggerät bzw. wiederum die Komponente des Fluggeräts, die seine aktuelle Position angibt, sich in dem Sollbereich befindet. Insbesondere da durch äussere Einflüsse auf das Fluggerät, beispielsweise durch Änderungen in der Luftströmung, Temperaturänderung und/oder veränderliche Druckverhältnisse, dieses oftmals nicht unbegrenzt lange an einer fixen Position schwebend gehalten werden kann, kann eine Definition eines entsprechenden Sollbereichs zur Positionierung vorteilhaft sein. Jedoch kann das Fluggerät durch eine ausgleichende Gegensteuerung gegen eine von aussen einwirkende Auslenkkraft eine innerhalb eines vorher definierten Sollbereichs veränderliche Position bewahren.

Eine beschriebene Positionierung der Zieleinheit mit geodätischer Genauigkeit kann für unterschiedliche Anwendungen genutzt werden.

Mit der vorliegenden Erfindung kann unter Verwendung der geodätisch genauen Positionierung der Zieleinheit eine Markierung eines Zielpunkts erfolgen. Hierfür ist die Zieleinheit mit einer Markiereinheit ausgestattet bzw. trägt einen derartige Markiereinheit. Die Markiereinheit kann als optische Markiereinheit, insbesondere als Laserstrahlquelle ausgeführt sein, wobei der Zielpunkt durch Aussenden des Laserstrahls optisch sichtbar markiert wird, und/oder kann eine Markierung des Zielpunkts mittels Anbringung einer aus Farbe, z.B. Sprühlack oder Tintenstrahl, bestehenden Markierung durchführen. Ferner kann die Markierung des Zielpunkts dadurch erfolgen, dass ein Gegenstand, z.B. ein Magnet, an der Zielpunktposition von der Zieleinheit "fallen gelassen" wird und damit auf dem Zielpunkt platziert wird. Ausserdem kann mittels der Zieleinheit eine klebende Markierung, beispielsweise ein Etikett oder eine Reflektorfolie, an dem Zielpunkt angebracht werden oder zur Markierung ein Projektil, z.B. ein Nagel von der Zieleinheit derart abgefeuert werden, dass durch ein Auftreffen des Projektils am Zielpunkt dieser markiert wird.

Eine Steuerung der Zieleinheit und der Markiereinheit zum Markieren kann mittels einer Steuereinheit erfolgen. Diese Steuereinheit kann zum einen die Positionierung der Zieleinheit durch einen, insbesondere ständig ablaufenden, Vergleich der aktuellen Position der Zieleinheit (Istposition), der Sollposition und der Zielpunktposition steuern. Dafür kann durch die Steuereinheit, z.B. durch Erzeugen von Steuerdaten, in Abhängigkeit dieser Positionen die Zieleinheit zu der Sollposition bzw. Sollbereich bewegt und bei Erreichen des Sollbereichs die Zieleinheit dort positioniert bzw. gehalten werden. Damit kann das relative Verhältnis von Ist-, Soll- und Zielpunktposition bekannt sein und weiter mittels der Steuereinheit unter zusätzlicher Berücksichtigung einer Markierrichtung der Markiereinheit diese Einheit derart angesteuert werden, dass die Markierung des Zielpunkts erfolgt. D.h. die Markiereinheit wird so aktiviert und/oder gesteuert, dass der Zielpunkt dann markiert wird, wenn unter Berücksichtigung der Istposition der Zieleinheit und der Markierrichtung der Markiereinheit der Zielpunkt genau mit einer durch die Markiereinheit erzeugten Markierung erreicht bzw. getroffen wird. Die hierfür erfolgende Datenverarbeitung kann beispielsweise auf der Zieleinheit, am Vermessungsgerät oder auf einer Fernbedieneinheit durchgeführt werden.

Insbesondere kann in einer Ausführungsform des erfindungsgemässen Markiersystems die Positionsbestimmungsanordnung mindestens eine Sendeeinheit zur Aussendung von Positionierungssignalen aufweisen und die Zieleinheit derart ausgebildet sein, dass die Positionierungssignale, insbesondere mittels einer GNSS-Antenne, empfangbar und die Istposition der Zieleinheit aus den Positionierungssignalen bestimmbar sind. Somit kann eine geodätisch genaue Positionsbestimmung der Zieleinheit erfolgen, welche für die Positionierung der Zieleinheit erfasst und berücksichtigt werden kann. Diese Art der Positionsbestimmung setzt zudem voraus, dass die Positionierungssignale, die von der Sendeeinheit bereitgestellt werden, von der Zieleinheit empfangen werden können, d.h. dass die Signale nicht durch allfällig vorhandene Hindernisse zwischen der Sendeeinheit und der Zieleinheit abgehalten bzw. blockiert werden.

Insbesondere können erfindungsgemäss die Sendeeinheit als GNSS-Sender, insbesondere GNSS-Satellit, insbesondere GPS-, GLONASS- oder Galileo-Satellit, ausgebildet sein und die Positionierungssignale durch GNSS-Signale verkörpert sein oder die Sendeeinheit ein Pseudo-Satelliten-Modul aufweisen und die Positionierungssignal durch Pseudo-Satelliten-Signale verkörpert sein. Soll z.B. die Positionsbestimmung der Zieleinheit und die Markierung eines Zielpunkts in einem geschlossenen Raum, beispielsweise in einer Fertigungshalle, erfolgen, so kann dort oftmals kein GNSS-Signal von der Zieleinheit empfangen werden. In diesem Fall kann eine Positionierung mittels eines Pseudo-Satelliten-Moduls, so genannten Pseudoliten oder Pseudo-Satelliten, in der Halle vorgenommen werden. Die Pseudoliten können an jeweils bekannten Positionen platziert werden und können von dort Positionsinformationen mittels der Pseudo-Satelliten-Signale, z.B. in einem einem GNSS-Signal ähnlichen Signalformat, aussenden, mittels welchem wiederum eine Positionsbestimmung auf Seiten der Zieleinheit durchgeführt werden kann. Die Signale können eine Bestimmung einer relativen Position innerhalb eines z.B. den Fertigungsraum repräsentierenden Koordinatensystems oder eines Objektkoordinatensystems erlauben. Sind ferner die Positionen der Pseudoliten relativ zu einem globalen Koordinatensystem bekannt, so kann auch eine absolute, globale Positionsbestimmung der Zieleinheit mittelbar durchführbar sein. Für eine derartige exakte Positionsbestimmung können seitens des Fluggeräts Signale von vier Pseudoliten empfangen werden, insbesondere wobei bei einer gemeinsamen Zeitbasis der Signale der Empfang von drei Signalen eine Positionsbestimmung genau durchführbar macht. Z.B. bei einer Positionierung der Zieleinheit in einer bekannten Höhe, können zwei Signale zur Positionsbestimmung ausreichend sein.

Weiterhin kann erfindungsgemäss zur Steigerung der Genauigkeit bei der Positionsbestimmung die Positionsbestimmungsanordnung eine GNSS-Referenzstation zur Aussendung von GNSS-Korrektursignalen aufweisen und die Zieleinheit derart ausgebildet sein, dass die GNSS-Korrektursignale empfangbar und die Istposition der Zieleinheit aus den empfangenen GNSS-Signalen und den GNSS-Korrektursignalen bestimmbar sind. Durch die so zusätzlich zur Verfügung gestellten Korrektursignale wird eine exaktere absolute Positionsbestimmung der Zieleinheit ermöglicht.

In einer weiteren erfindungsgemässen Ausführung des Markiersystems kann die Zieleinheit einen Reflektor und die Positionsbestimmungsanordnung ein geodätisches Vermessungsgerät, insbesondere Theodolit oder Totalstation, aufweisen. Das Vermessungsgerät verfügt dabei mindestens über eine Anzieleinrichtung, insbesondere Ziel-Fernrohr, wobei die Anzieleinrichtung gegenüber einer Basis des Vermessungsgeräts zur Änderung deren Ausrichtung, insbesondere motorisiert, schwenkbar ist und zumindest eine eine optische Zielachse definierende Emissionseinheit und eine Strahlungsquelle zur Emission eines optischen Messstrahls zur Entfernungsmessung parallel, insbesondere koaxial, zur optische Zielachse, aufweist. Darüber hinaus sind eine Winkelmessfunktionalität zur hochpräzisen Erfassung der Ausrichtung der Zielachse und Auswertemittel zur Datenspeicherung und Steuerung der Ausrichtung der Anzieleinrichtung vorgesehen. Der Messstrahl ist somit auf den Reflektor ausrichtbar, sodass die Istposition der Zieleinheit bestimmbar ist. Am Reflektor kann die Messstrahlung zur Vermessungseinheit zurück reflektiert und dort erfasst werden. So kann aus dieser reflektierten Messstrahlung eine Entfernung von dem Vermessungsgerät zur Zieleinheit bzw. zum Reflektor bestimmt und unter Berücksichtigung der Ausrichtung der Anzieleinrichtung die Position der Zieleinheit angegeben werden.

Weiters kann im Rahmen der Erfindung ein zu der Zieleinheit übermittelbares Signal, insbesondere wobei das Signal verkörpert ist durch ein Funksignal, ein einem Laserstrahl aufmoduliertes Signal oder elektronisches Signal, eine Positionsinformation, wobei die Positionsinformation in einer ersten der Zieleinheit zugeordneten Verarbeitungseinheit in Steuerungsdaten umsetzbar ist, oder die Steuerungsdaten selbst, wobei die Steuerungsdaten mittels einer zweiten dem Vermessungsgerät zugeordneten Verarbeitungseinheit aus der Positionsinformation ermittelbar sind, aufweisen. Wird somit mit einem Vermessungsgerät die Position der Zieleinheit bestimmt, so können die erfassten Positionsinformationen direkt z.B. mittels Funk zu der Zieleinheit übertragen werden und zieleinheitsseitig die Positionsinformationen zur Steuerung, insbesondere zur Erzeugung von Steuerungsdaten, herangezogen werden. Alternativ oder zusätzlich dazu können die Positionsinformationen direkt auf Seiten des Vermessungsgeräts weiterverarbeitet werden und auf Basis dieser Information Steuerungssignale oder Steuerdaten zur Steuerung der Zieleinheit an diese übermittelt werden.

Erfindungsgemäss kann eine Zieleinheit ausserdem zumindest vorübergehend weitestgehend horizontal positionsfest schwebend positionierbar sein, insbesondere wobei eine Einwirkung auf die Positionierung durch äussere Einflüsse, insbesondere Luftströmung, Druck- und/oder Temperaturschwankung, in vertikaler Richtung ausgleichbar sind. Insbesondere bei einem als Zieleinheit vorgesehenen Fluggerät kann ein derartiger Positionsausgleich eine korrekte und nutzbare Positionierung der Zieleinheit gewährleisten. Ändert sich z.B. eine Windstärke oder eine Windrichtung, welche für eine schwebende Positionierung des Fluggeräts berücksichtigt wird, so kann eine Gegensteuerung mit einer Antriebseinheit z.B. einem Rotor des Fluggeräts als Reaktion darauf erfolgen. Dabei kann vorteilhaft sein, wenn das Fluggerät bei einer Gegenreaktion seine horizontale Position weitgehend hält und zum Ausgleich eine Korrektur bzw. Neupositionierung hauptsächlich in vertikaler Richtung erfolgt.

Zudem kann das Markiersystem eine Fernsteuereinheit zur Steuerung der Zieleinheit aufweisen, insbesondere wobei die Fernsteuereinheit ein Display zur Darstellung von Information aufweist. Mit einer derartigen Fernsteuereinheit können steuerungsrelevante Daten zur Zieleinheit übertragen und/oder empfangen werden oder ferner eine manuelle Steuerung der Zieleinheit durch einen Bediener erfolgen. Eine Kommunikation und Energieversorgung zwischen der Fernsteuereinheit, der Zieleinheit und/oder einem Vermessungsgerät kann dabei beispielsweise über ein Kabel erfolgen. Weiters kann eine Datenverarbeitung zur Steuerung auf der Fernsteuereinheit erfolgen, wobei die Fernsteuereinheit z.B. als PDA, Smartphone oder Tablet-PC realisiert sein kann.

Im Rahmen der Erfindung kann mit dem Markiersystem beispielsweise eine Markierung von Positionen von Bohrlöchern an einer Wand durchgeführt werden. Hierfür kann im System ein digitales Modell eines Gebäudes oder Raumes hinterlegt sein, wobei in Abhängigkeit des Modells eine Definition der Positionen der Löcher vorgenommen werden kann. Die Zieleinheit kann, z.B. ebenfalls in Abhängigkeit des Digitalmodells, definiert relativ zu einer Bohrlochposition positioniert werden und dabei die Markierung des Lochs, z.B. durch sichtbare Laserstrahlung, bewirken. Mittels dieser Markierung kann nun ein Bediener des Systems das jeweilige Bohrloch setzten oder die Position manuell markieren und im Anschluss die Zieleinheit zur nächsten Bohrlochposition steuern bzw. automatisch die nächste Position einnehmen lassen. Dort kann wiederum eine derartige Markierung erfolgen und somit die Bohrlöcher nacheinander markiert oder gebohrt werden.

Zudem kann erfindungsgemäss die Zieleinheit eine Sensoreinheit zur Bestimmung einer Ausrichtung und/oder der Istposition der Zieleinheit aufweisen, insbesondere einen Neigungssensor, ein Magnetometer, einen Beschleunigungssensor, einen Drehratensensor und/oder einen Geschwindigkeitssensor. Ausserdem kann die Zieleinheit eine die Ausrichtung der Zieleinheit angebende Komponente aufweisen und das Markiersystem eine Erfassungsvorrichtung, insbesondere Kamera, zur Erfassung und/oder Anzielung der Komponente und zur Bestimmung der Ausrichtung der Zieleinheit aus der Lage und Anordnung der Komponente aufweisen.

Die Bestimmung von Position und Orientierung einer Einheit kann dabei z.B. durch einen Lasertracker erfolgen. Die Orientierung der Zieleinheit kann durch eine Messung der Lage von auf der Einheit angeordneten Markierungen von der Abtasteinheit erfasst werden. Aus der Kenntnis der Lage und der Anordnung der Markierungen und der Kenntnis der Lage des Lasertrackers relativ zu der Zieleinheit kann die Orientierung der Einheit abgeleitet werden. Aus der Positions- und der Orientierungsinformation folgt damit die Kenntnis der Lage im Raum. Ein derartiges Verfahren zur Ausrichtungsbestimmung wird beispielsweise in der WO 2006/097408 beschrieben. Die Orientierung kann ferner anhand eines Versatzes eines Empfängers zu einer Messstrahlachse, die durch einen den Empfänger anzielenden Messstrahl definiert wird, bestimmt werden, wobei die Optik des Empfängers dabei lediglich einen begrenzten Öffnungswinkel aufweist.

Weiters kann das Bestimmen der Ausrichtung durch ein Verfahren durchgeführt werden, wobei ein Emittieren eines Laserstrahls in Richtung eines an der Zieleinheit angeordneten Detektors erfolgt und eine Aussendrichtung des Laserstrahls definiert wird. Es folgt ein Bestimmen eines Auftreffpunktes des Laserstrahls auf dem Detektor. Aus diesem Auftreffpunkt wird die Einfallsrichtung abgeleitet. Anhand eines Verknüpfens der Einfallsrichtung mit der Aussendrichtung ist nun das Bestimmen der Ausrichtung des Detektors relativ zur Laserquelle und damit der Zieleinheit möglich. Ein solches Verfahren ist z.B. aus der WO 2008/138507 bekannt.

Bei einer weiteren bekannten Möglichkeit, Informationen über die Orientierung der Zieleinheit bereitzustellen, wird die Position der Zieleinheit verfolgt und aus den Positionsänderungen eine Bewegungsrichtung bestimmt. Mit der Annahme, dass die Bewegungsrichtung einer bestimmten Orientierung der Zieleinheit entspreche, kann daraus Information über die Orientierung der Zieleinheit abgeleitet werden. Die Positionsänderung kann z.B. mittels einer fortlaufenden Positionsbestimmung durch GPS bestimmt werden.

Zudem kann die Position und Drehlage bzw. Ausrichtung eines Objekts im Raum mittels einer optischen Messvorrichtung erfolgen. Die Messvorrichtung kann dabei eine Abbildungsoptik und einen in zwei Dimensionen ortsauflösenden Detektor aufweisen. Das Objekt bzw. die Zieleinheit kann ein bekanntes Codemuster, z.B. einen Barcode oder Pseudo-Random-Code, aufweisen und das mit der Messvorrichtung erfasste Muster ausgewertet werden. Je nach Lage des erfassten Codes kann dadurch auf die jeweilige Lage der Zieleinheit im Raum geschlossen werden. Ein diesem Prinzip entsprechendes Verfahren wird beispielsweise in der EP 1 066 497 geoffenbart.

Die vorgenannten Möglichkeiten zur Bestimmung einer Ausrichtung können in Kombination mit einer Positionsbestimmung der Zieleinheit zur exakten Bestimmung der sechs Freiheitsgrade (six degrees of freedom, 6-DoF) und somit der genauen Lage der Zieleinheit im Raum dienen.

Ein erfindungsgemässes Verfahren zum Steuern eines mit geodätischer Genauigkeit erfolgenden Markierens eines bekannten Zielpunkts weist eine auto-mobile, unbemannte, fernsteuerbare Zieleinheit, insbesondere ein Fluggerät, auf, wobei eine äussere Istposition der Zieleinheit, insbesondere fortlaufend, bestimmt wird. Die Zieleinheit trägt eine, insbesondere modulartig abnehmbare, Markiereinheit zum Markieren des Zielpunkts. Im Rahmen des Verfahrens wird in Abhängigkeit der, insbesondere fortlaufend bestimmten, äusseren Istposition und einer bekannten Zielpunktposition des Zielpunkts die Zieleinheit in einer definierten Sollposition, insbesondere in einem definierten Toleranzbereich um die Sollposition, relativ zur Zielpunktposition, insbesondere fortlaufend, positioniert. Weiterhin wird unter Berücksichtigen der Istposition, der Sollposition und einer definierten Markierrichtung von der Markiereinheit zum Zielpunkt die Markiereinheit zur Markierung des Zielpunkts gesteuert, sodass der Zielpunkt in der definierten Markierrichtung mit geodätischer Genauigkeit markiert wird.

Mit dem erfindungsgemässen Verfahren kann allgemein eine Zieleinheit, beispielsweise ein Fahrzeug oder ein Fluggerät, in eine definierte Position relativ zu einer bekannten Zielpunktposition oder relativ zu einem beliebigen Punkt, dessen Position bekannt ist, gebracht werden. Ein derartiges Positionieren kann eine allgemeine Basis für eine weiter mit der Zieleinheit auszuführende Aktion bilden. Mit der vorliegenden Erfindung kann insbesondere das Markieren des Zielpunkts erfolgen. Hierzu wird die Zieleinheit vorerst in Abhängigkeit ihrer Istposition und der Zielpunktposition in eine bestimmte Position - in die Sollposition - gesteuert und dort weitgehend positionsfix positioniert. Zum Markieren des Zielpunkts wird die Markiereinheit in Abhängigkeit der Istposition, der Sollposition, insbesondere in Abhängigkeit davon, ob die Zieleinheit sich in der Sollposition bzw. im Sollbereich befindet, und der Markierrichtung der Markiereinheit derart gesteuert, dass durch die Markiereinheit der Zielpunkt markiert wird.

Insbesondere können im Rahmen des erfindungsgemässen Verfahrens Positionierungssignale von der Zieleinheit empfangen und die äussere Istposition, insbesondere eine Ausrichtung der Zieleinheit, aus den Positionierungssignalen bestimmt werden, insbesondere wobei die Positionierungssignale durch GNSS-Signale, Pseudo-Satelliten-Signale und/oder GNSS-Korrektursignale verkörpert werden und die Istposition aus den GNSS-Signalen und/oder den GNSS-ähnlichen Signalen, insbesondere unter Berücksichtigen der GNSS-Korrektursignale, bestimmt wird. Zusätzlich oder alternativ dazu kann ein Messstrahl zieleinheitsseitig reflektiert und die äussere Istposition mittels des reflektierten Messstrahls bestimmt werden. Mittels einer dieser Methoden oder durch eine Kombination der Methoden untereinander kann eine absolute, geodätisch genaue Position der Zieleinheit bestimmt werden und basierend darauf eine Positionierung dieser erfolgen. Muss bei der Verwendung von Positionierungssignalen bzw. GNSS-Signalen auf eine Empfangbarkeit der Signale geachtet werden, kann bei einer Reflexion eines Messstrahls unabhängig von einer möglichen Signalabschirmung eine Positionsbestimmung erfolgen.

Weiterhin können im Rahmen der Erfindung eine Ausrichtung der Zieleinheit, insbesondere in Nick-, Roll- und Gierrichtung, und/oder ein Abstand zu einem Objekt, insbesondere zu einem Hindernis, bestimmt, und/oder ein Bild, insbesondere wobei das Bild den Zielpunkt aufweist, erfasst werden. Der Zielpunkt kann sich somit im Bildfeld der Kamera befinden. Eine Bestimmung der Ausrichtung der Zieleinheit kann beispielsweise bei einer Steuerung zur Positionierung berücksichtigt werden oder für eine geforderte bzw. für eine Positionierung in einer definierten Ausrichtung genutzt werden. Darüber hinaus können durch die Bestimmung von Abständen zu Objekten Hindernisse in einer Flugbahn bzw. einer Route der Zieleinheit erkannt und entweder, insbesondere automatisch, umgangen oder die Zieleinheit unter Berücksichtigung des jeweiligen Hindernisses positioniert werden. Zusätzlich können Bilder einer Umgebung erfasst werden, in welcher die Zieleinheit bewegt wird. Durch das Erfassen einer Bildabfolge kann auch eine Bewegung bzw. ein Pfad, entlang welchem sich die Zieleinheit bewegt, bestimmt und in Folge dessen eine fortlaufende Bestimmung der Istposition abgeleitet werden. Insbesondere bei der Miterfassung des Zielpunktes auf einem Bild kann weiters die Zieleinheit auf Grundlage der Bildinformation zu einer Sollposition gesteuert oder dort platziert werden. Ausserdem kann einem Benutzer so eine Bildinformation zur Verfügung stehen auf deren Basis dieser die Zieleinheit - auch manuell - steuern kann.

Weiter kann - erfindungsgemäss - das Markieren des Zielpunkts mit optisch sichtbarer Strahlung erfolgen und eine Strahlungsrichtung der Strahlung parallel, insbesondere koaxial, zur Markierrichtung liegen. Die Markierstrahlung kann bei Erreichen der Sollposition und passender Ausrichtung der Markierrichtung aktiviert und kontinuierlich und/oder pulsierend emittiert werden, um den Zielpunkt anzuzeigen.

Insbesondere kann im Rahmen des erfindungsgemässen Verfahrens die Markierrichtung der Markiereinheit parallel, insbesondere selbsttätig, zur Lotrichtung und/oder definiert relativ zur Ausrichtung der Zieleinheit ausgerichtet werden, insbesondere wobei die Markiereinheit kardanisch aufgehängt ist und/oder die Zieleinheit Ausrichtmittel zum definierten Ausrichten der Markierrichtung aufweist, insbesondere wobei die Markiereinheit in zwei, insbesondere in drei, Achsen geschwenkt wird. Durch die kardanische Aufhängung kann die Markierrichtung ständig automatisch parallel zur Lotrichtung, d.h. parallel zum Schwerkraftvektor, der Erde ausgerichtet sein und hat zur Folge, dass eine exakte Ausrichtung der Zieleinheit bei einer senkrechten Positionierung über dem Zielpunkt zum Markieren des Zielpunkts nicht zwingend erforderlich ist. Wird jedoch die Zieleinheit nicht senkrecht über einem Zielpunkt positioniert, beispielsweise deshalb weil ein Hindernis wie z.B. ein Baum eine derartige Positionierung verhindert, so kann die Markierrichtung mittels der Ausrichtmittel derart ausgerichtet werden, dass der Zielpunkt in einem bestimmten Winkel zur Lotrichtung markiert wird. Zusätzlich können die Ausrichtmittel ein Schwenken bzw. Rotieren der Markierrichtung um bis zu drei Achsen und damit eine nicht nur punktuelle Markierung des Zielpunkts, sondern auch eine Markierung durch ein Muster ermöglichen, welches z.B. bei schneller Bewegung einer als Laserstrahlung ausgestalteten Markierung entsteht.

Bei einer Einwirkung auf die Positionierung der Zieleinheit durch äussere Einflüsse, insbesondere durch Luftströmung, Druck- und/oder Temperaturschwankung, kann alternativ oder zusätzlich zu einer definierten Positionsänderung der Zieleinheit zur Beibehaltung einer Zielpunktmarkierung eine Neuausrichtung der Markierrichtung der Markiereinheit erfolgen. Hierbei kann z.B. die Ausrichtung eines zur Markierung dienenden Laserstrahls durch die Ausrichtmittel so verändert werden, dass eine Änderung eines Emissionswinkels des Laserstrahls in Abhängigkeit eines verursachten Versatzes der Zieleinheit erfolgt und der Strahl damit auf den Zielpunkt gerichtet bleibt und diesen in der versetzten Position der Zieleinheit weiterhin markiert.

In einer Ausführungsform kann im Rahmen des Verfahrens ein Pfad durch Wegpunkte definiert werden, wobei die Zieleinheit entlang des Pfads bewegt wird, insbesondere wobei ein Optimieren eines Pfadverlaufs, insbesondere automatisch, erfolgt und/oder der Pfad den Zielpunkt und/oder die Sollposition aufweist, und/oder ein Markieren der Position der Wegpunkte als Zwischenzielpunkte fortlaufend entlang des Pfads erfolgt. Damit können Wegpunkte abgesteckte werden, welche den Weg hin zu einem Zielpunkt definieren und/oder welche Zwischenzielpunkte bilden und somit ebenfalls markiert werden sollen. Auf Basis der bestimmten Wegpunkte kann darüber hinaus der Bewegungspfad der Zieleinheit optimiert werden, insbesondere wenn durch die Definition der Wegpunkte bekannte Hindernisse im Voraus umfahren bzw. umflogen werden. Die Markierung der Wegpunkte kann ferner mittels eines optischen Systems, wie beispielsweise eines sichtbaren Laserstrahls, oder mittels einer Farbmarkierung z.B. mit einen Lack oder Sprühlack erfolgen. Zudem kann die Markierung vollautomatisch ablaufen, d.h. die Zieleinheit bewegt sich fortlaufend von Wegpunkt zu Wegpunkt und nimmt gegebenenfalls jeweils eine Markierung vor, oder semiautomatisch erfolgen, d.h. die Zieleinheit bewegt sich automatisch zu einem Wegpunkt und hält die Position bis ein Benutzer ein Signal zur Positionierung am nächsten Wegpunkt gibt.

In einer weiteren Ausführung der Erfindung können Informationen und/oder Steuerbefehle, insbesondere die Zielpunktposition, in die Zieleinheit eingegeben werden, und/oder Informationen, insbesondere das erfasste Bild, insbesondere auf einem Display, ausgegeben werden. Durch diese Kommunikationsmöglichkeit mit der Zieleinheit kann ein Programmieren und/oder Steuern der Zieleinheit vereinfacht und beschleunigt werden.

Ein weiterer Gegenstand der Erfindung ist eine auto-mobile, unbemannte, fernsteuerbare Zieleinheit, insbesondere Fluggerät, insbesondere eine Drohne, zur Verwendung in einem erfindungsgemässen Markiersystem. Die Zieleinheit ist derart ausgebildet, dass die Zieleinheit zumindest vorübergehend weitestgehend positionsfest, insbesondere schwebend, positionierbar ist. Weiters sind Positionsinformationen zur Bestimmung einer äusseren Istposition der Zieleinheit und zur Erzeugung von Steuerungsdaten und/oder die Steuerungsdaten direkt zur Zieleinheit übermittelbar. Zusätzlich trägt die Zieleinheit eine Markiereinheit zur Markierung eins Zielpunkts, insbesondere wobei die Markiereinheit modulartig abnehmbar ausgeführt ist, und die Steuerungsdaten derart ausgestaltet sind, dass in Abhängigkeit der, insbesondere fortlaufend bestimmbaren, äusseren Istposition und einer bekannten Zielpunktposition des Zielpunkts die Zieleinheit in einer definierten Sollposition, insbesondere in einem definierten Toleranzbereich um die Sollposition, relativ zur Zielpunktposition, insbesondere fortlaufend, positionierbar ist. Unter Berücksichtigung der Istposition, der Sollposition und einer definierten Markierrichtung von der Markiereinheit zum Zielpunkt ist die Markiereinheit zur Markierung des Zielpunkts steuerbar, sodass der Zielpunkt in der definierten Markierrichtung mit geodätischer Genauigkeit markierbar ist.

Die erfindungsgemässe Zieleinheit kann z.B. verkörpert werden durch ein Fluggerät, welches z.B. mittel mindestens zweier Rotoren und/oder Düsen weitgehend positionsfest schwebend positioniert werden kann, oder z.B. durch ein geländegängiges Fahrzeug, welches fahrend zu einer Zielposition gesteuert werden kann und so positionierbar ist. Weiterhin kann die Zieleinheit z.B. mittels Funksignalen, über einen Laserstrahl oder kabelgebunden ferngesteuert werden, wobei die Zieleinheit selbst unbemannt und auto-mobil, d.h. über einen motorisierten Antrieb verfügt, welcher eine unabhängige Fortbewegung der Zieleinheit bereitstellt, ausgeführt ist. Die Zieleinheit weist zusätzlich eine Markiereinheit auf, mit der eine Markierung des Zielpunkts durchführbar ist. Durch Steuerdaten kann die Zieleinheit unter Berücksichtigung der eigenen Position (Istposition), der Zielpunktposition und einer Position in welcher die Zieleinheit positioniert werden soll (Sollposition) gesteuert und platziert werden. Unter einer zusätzlichen Berücksichtigung der Markierrichtung in den Steuerdaten kann der Zielpunkt dann durch die Markiereinheit geodätisch genau markiert werden.

Insbesondere kann eine erfindungsgemässe Zieleinheit einen Empfänger für Positionierungssignale, insbesondere eine GNSS-Antenne, und eine Verarbeitungseinheit zur Bestimmung einer Istposition der Zieleinheit aus den Positionierungssignalen aufweisen. Ferner können insbesondere die Positionierungssignale durch GNSS-Signale, insbesondere wobei die GNSS-Signale repräsentiert werden durch GPS-, GLONASS- oder Galileo-Signale, Pseudo-Satelliten-Signale und/oder GNSS-Korrektursignale verkörpert sein und die Istposition aus den GNSS-Signalen und/oder den GNSS-ähnlichen Signalen, insbesondere unter Berücksichtigung der GNSS-Korrektursignale, bestimmbar sein. Weiterhin kann die Zieleinheit einen Reflektor aufweisen. Mittels derartiger Empfänger oder mittels des Reflektors kann eine absolute Position der Zieleinheit bestimmt werden, indem entweder die Positionierungssignale bzw. GNSS-Signale erfasst und in Positionsinformation umgesetzt werden oder der Reflektor angezielt und dadurch die Position der Zieleinheit bestimmt wird.

Eine Zieleinheit im Sinne der Erfindung kann ferner eine Sensoreinheit zur Bestimmung einer Ausrichtung und/oder der Istposition der Zieleinheit aufweisen, insbesondere einen Neigungssensor, ein Magnetometer, einen Beschleunigungssensor, einen Drehratensensor und/oder einen Geschwindigkeitssensor. Mittels einer solchen Sensoreinheit und er damit erfassbaren Ausrichtung der Zieleinheit kann eine Berücksichtigung der Ausrichtung z.B. bei der Positionierung der Einheit erfolgen und/oder die Ausrichtung der Zieleinheit definiert gesteuert werden.

Ausserdem kann die erfindungsgemässe Zieleinheit einen Sensor zur Abstandsmessung zu Objekten, insbesondere Radar, aufweisen, wobei mittels dieses Sensors z.B. Hindernisse erkannt und damit bei der Bewegung der Zieleinheit berücksichtigt oder umgangen werden können. Die Zieleinheit kann weiter eine optische Erfassungseinheit, insbesondere Kamera, zur Erfassung eines Bildes aufweisen, insbesondere wobei das Bild den Zielpunkt aufweist bzw. sich der Zielpunkt im Bildfeld befindet. Mit dieser Erfassungseinheit, z.B. einer Videokamera, können ein oder mehrere Bilder einer Kameraumgebung bzw. eine Luftaufnahme eines Geländes erfasst werden und durch Bildverarbeitungsprozesse z.B. eine Änderung in der Position der Zieleinheit festgestellt werden. Zusätzlich kann die Bildinformation dazu verwendet werden, um die Steuerung der Zieleinheit, insbesondere hin zu einer definierten Position, durchzuführen und/oder einem Operator eine Bildinformation für Mess- oder Markierungsprozesse oder Bilder zur Dokumentation eines Vermessungsprozesses bereitzustellen.

Zudem kann in Abhängigkeit von erfassten Bildern eine Positionsbestimmung der Zieleinheit erfolgen. Dafür kann eine Serie von Bildern erfasst werden, deren Bildbereiche sich jeweils teilweise überlappen. Die Überlappungsbereiche können beispielsweise durch einen Vergleich von auf den Bildern erfassten Mustern, insbesondere durch Bildverarbeitung bzw. Vergleich der Überlappungsbereiche der Bilder, abgeglichen werden. Daraus kann die relative Lage eines Bildes zu einem nachfolgenden Bild bestimmt werden und aus der Grösse des Überlappungsbereichs und einem Drehwinkel, um den das nachfolgende Bild bildverarbeitungsmässig gedreht werden muss damit eine Übereinstimmung z.B. eines markanten Musters in dem Überlappungsbereich erreicht werden kann, ein Bewegungsfortschritt der Bilderfassungseinheit und damit der Zieleinheit abgeleitet werden. Weiters kann eine Erkennung von markanten Wegpunkten, deren Koordinaten bekannt sind, erfolgen und daraus direkt eine zumindest horizontale Absolutposition bestimmbar sein. Insbesondere kann eine derartige Positionsbestimmung beispielsweise bei einem Ausfall des GNSS-Systems oder einer Abdeckung der GNSS-Signale, sodass keine Positionsbestimmung möglich ist, durchführbar sein, wobei ein koordinativ bekannter Startpunkt der Zieleinheit bei der Bestimmung berücksichtigt werden kann. Zur zumindest groben Bestimmung einer vertikalen Positionsänderung können Zoomfaktoren einzelner oder mehrerer Bilder miteinander verglichen und wiederum aus allfälligen Bildmusterübereinstimmungen auf eine Höhenänderung geschlossen werden.

Mittels der erfassten Bilder kann sich die Zieleinheit anhand einer zeitinvarianten Textur z.B. am Boden positionell stabilisieren. Diese Stabilisation kann wiederum durch einen Vergleich zeitlich beabstandet erfasster Bilder derart erfolgen, dass eine Positionskorrektur der Zieleinheit mit dem Ziel eines In-Übereinstimmung-Bringens eines aktuell erfassten Bildes bzw. einer auf dem Bild erfassten Textur mit der Textur auf einem zeitlich vorher erfassten Bild erfolgt. Dies kann gleichzeitig die Präzision der Markierung unterstützen oder bei einer zeitweiligen Unterbrechung eines Steuersignals die Zieleinheit positionierbar machen.

Zusätzlich kann aus Basis der bei einem Hinbewegen der Zieleinheit zu einem Zielpunkt erfassten Bilder ein autonomes Zurückbewegen der Zieleinheit zum jeweiligen Startpunkt erfolgen. Dieses Zurückbewegen kann zum einen durch ein Bewegen entlang einer aus den Bildern abgeleiten Route oder durch ein Bewegen mittels Bildvergleich erfolgen. Der Bildvergleich kann dabei als Vergleich von erfassten Bildern des Hinbewegens mit beim Zurückbewegen erfasster Bilder ausführbar sein.

Darüber hinaus kann eine erfindungsgemässe Zieleinheit zur definierten, insbesondere selbsttätig parallelen, Ausrichtung der Markierrichtung eine kardanische Aufhängung und/oder Ausrichtmittel für die Markiereinheit aufweisen, insbesondere wobei die Markiereinheit in zwei, insbesondere in drei, Achsen schwenkbar ist. Insbesondere kann die Markiereinheit ferner eine Strahlquelle zur Emission optisch sichtbarer Strahlung aufweisen und die Strahlquelle derart angeordnet sein, dass eine Emissionsrichtung der optischen Strahlung parallel, insbesondere koaxial, zur Markierrichtung verläuft. Bei kardanischer Aufhängung der Markiereinheit kann eine stetige Ausrichtung der Markierrichtung bzw. der optisch sichtbaren Strahlung, beispielsweise einer Laserstrahlung im sichtbaren Wellenlängenbereich, parallel zur Lotrichtung der Erde derart realisiert werden, dass bei einer Positionierung der die Markiereinheit tragenden Zieleinheit vertikal über einem Bodenpunkt dieser Bodenpunkt bei Aktivierung der Markiereinheit, d.h. beispielsweise bei Emission der Laserstrahlung, automatisch markiert wird. Mit Hilfe der Ausrichtmittel kann die Markierrichtung in einem definierten Winkel relativ zur Lotrichtung ausgerichtet werden und damit einem Markierung eines Zielpunkts auch dann erfolgen, wenn sich die Zieleinheit nicht lotrecht über dem Zielpunkt befindet, sondern versetzt zur Lotrichtung platziert ist. Insbesondere wenn ein Hindernis im Gelände, z.B. ein Baum oder Felsvorsprung, eine vertikale Positionierung der Zieleinheit über dem Zielpunkt verhindert, kann die Markierung des Punkts dennoch durchgeführt werden. Ferner kann eine gezielte Ausrichtung der Markierrichtung zur Kompensation oder zum Ausgleich von durch äussere Einflüsse verursachten, ungewollten Positionsveränderungen der Zieleinheit erfolgen, sodass trotz eines derartigen Versatzes ein Markieren des Zielpunkts erfolgen kann.

Weiters kann die Zieleinheit - erfindungsgemäss - eine Eingabeeinheit, insbesondere Tastatur, berührungssensitives Display und/oder Datenschnittstelle, zur Eingabe von Information und/oder Steuerbefehlen, insbesondere der Zielpunktposition, und/oder eine Ausgabeeinheit, insbesondere Display, zur Ausgabe von Information, insbesondere des von der Kamera erfassten Bildes, aufweisen. Derartige Eingabemöglichkeiten können einem Benutzer die Eingabe von Informationen, die für einen Arbeitsvorgang mit der Zieleinheit benötigt werden, ermöglichen bzw. vereinfachen. So kann damit eine Zielpunktposition gespeichert werden und die Zieleinheit automatisch und selbsttätig diese Position anfahren bzw. anfliegen und damit ein vollautomatisches Markieren eines Zielpunkts durchführbar machen. Entsprechende Positionsinformationen können auch über die Datenschnittstelle in und/oder aus der Zieleinheit übermittelt werden. Ein zusätzlich vorgesehenes Display kann einem Benutzer die Dateneingabe weiter erleichtern und/oder z.B. Umgebungsinformationen bereitstellen.

Eine Fernsteuereinheit zur Steuerung der Zieleinheit kann ausserdem einer erfindungsgemässen Zieleinheit zugeordnet sein, insbesondere wobei die Fernsteuereinheit ein Display zur Darstellung von Information und/oder des von der Kamera erfassten Bildes aufweist. Diese Fernsteuereinheit kann dem Benutzer zusätzliche oder alternative Eingabe- und Ausgabemittel bieten. So kann eine Programmierung der Zieleinheit mittels dieser Fernsteuereinheit erfolgen und beispielsweise auf einem Display an der Fernsteuereinheit ein zieleinheitsseitiges erfasstes Bild so angezeigt werden, dass ein fortlaufend erzeugtes Umgebungsbild zur Steuerung, insbesondere zu einem manuellen Steuerung durch einen Bediener, herangezogen werden kann.

Eine erfindungsgemässe Markieranordnung zur Markierung eines bekannten Zielpunkts und zur Verwendung in einem erfindungsgemässen Markiersystem weist eine fernsteuerbare Markiereinheit und eine geodätische Positionsbestimmungsanordnung, insbesondere Theodolit oder Totalstation, zur äusseren Positionsbestimmung der Markiereinheit, wobei eine äussere Istposition der Markiereinheit, insbesondere fortlaufend, mittels der Positionsbestimmungsanordnung bestimmbar ist, auf. Die Markieranordnung verfügt über eine Steuereinheit, wobei die Steuereinheit derart konfiguriert ist, dass in Abhängigkeit der, insbesondere fortlaufend bestimmbaren, äusseren Istposition und einer bekannten Zielpunktposition des Zielpunkts die Zieleinheit in einer definierten Sollposition, insbesondere in einem definierten Toleranzbereich um die Sollposition, relativ zur Zielpunktposition, insbesondere fortlaufend, positionierbar ist. Weiters ist die Steuereinheit so konfiguriert, dass unter Berücksichtigung der Istposition, der Sollposition und einer definierten Markierrichtung von der Markiereinheit zum Zielpunkt die Markiereinheit steuerbar ist, sodass der Zielpunkt in der definierten Markierrichtung mit geodätischer Genauigkeit markierbar ist.

Mit der Positionsbestimmungsanordnung kann die absolute und aktuelle Position der Markiereinheit festgestellt werden, insbesondere kann damit die Markiereinheit verfolgt und als Folge die Position dieser fortlaufend bzw. kontinuierlich erfasst werden. In Kenntnis der aktuellen Position der Markiereinheit und der Zielpunktposition kann in Abhängigkeit dieser beiden Positionen die Markiereinheit so gesteuert werden, dass diese in einer bestimmten Sollposition positionierbar ist. Mittels der Steuereinheit kann die Markiereinheit ferner so angesteuert werden, dass unter Berücksichtigung der aktuellen Markiereinheitsposition, insbesondere bei Übereinstimmung mit der Sollposition, und einer Ausrichtung der Markierrichtung die Markierung des Zielpunkts durch die Markiereinheit erfolgen kann.

Die Positionsbestimmungsanordnung der Markieranordnung gemäss der Erfindung kann mindestens eine Sendeeinheit zur Aussendung von Positionierungssignalen aufweisen und die Markiereinheit kann derart ausgebildet sein, dass die Positionierungssignale, insbesondere mittels einer GNSS-Antenne, empfangbar und die Istposition der Markiereinheit aus den Positionierungssignalen bestimmbar sind. Insbesondere können die Sendeeinheit als GNSS-Sender, insbesondere GNSS-Satellit, insbesondere GPS-, GLONASS- oder Galileo-Satellit, ausgebildet sein und die Positionierungssignale durch GNSS-Signale verkörpert sein. Die Sendeeinheit kann ferner ein Pseudo-Satelliten-Modul aufweisen und die Positionierungssignal durch Pseudo-Satelliten-Signale verkörpert sein. Insbesondere kann die Positionsbestimmungsanordnung eine GNSS-Referenzstation zur Aussendung von GNSS-Korrektursignalen aufweisen und die Markiereinheit derart ausgebildet sein, dass die GNSS-Korrektursignale empfangbar und die Istposition der Markiereinheit aus den empfangenen GNSS-Signalen und den GNSS-Korrektursignalen bestimmbar sind.

Eine weitere Positionsbestimmungsmöglichkeit gemäss der Erfindung kann mit der Positionsbestimmungsanordnung mit einem geodätischen Vermessungsgerät, insbesondere Theodolit oder Totalstation, wobei die Position der Markiereinheit durch einen Reflektor im Raum hochpräzise angegeben wird, realisiert sein. Dabei weist das geodätische Vermessungsgerät eine Anzieleinrichtung auf, insbesondere Ziel-Fernrohr, wobei die Anzieleinrichtung gegenüber einer Basis des Vermessungsgeräts zur Änderung deren Ausrichtung, insbesondere motorisiert, schwenkbar ist und zumindest eine eine optische Zielachse definierende Emissionseinheit und eine Strahlungsquelle zur Emission eines optischen Messstrahls parallel, insbesondere koaxial, zur optische Zielachse zur Entfernungsmessung, aufweist. Zusätzlich sind eine Winkelmessfunktionalität zur hochpräzisen Erfassung der Ausrichtung der Zielachse und Auswertemitteln zur Datenspeicherung und Steuerung der Ausrichtung der Anzieleinrichtung vorgesehen. Der Messstrahl kann somit auf den Reflektor ausrichtbar sein, sodass die Istposition der Markiereinheit dadurch bestimmbar ist. Durch eine Positionsbestimmung mit einem Vermessungsgerät kann eine allfällig eingeschränkte Empfangbarkeit von GNSS-Signalen und ein damit verbundene eingeschränkte oder nicht mögliche Positionsbestimmung ersetzt und die Bestimmung dennoch durchgeführt werden. Hierfür ist - nachdem eine absolute Position des Vermessungsgeräts z.B. mittels eines initialisierenden Einmessvorgangs bekannt ist - die Bestimmung der aktuellen Position der Markiereinheit dann durchführbar, wenn eine Sichtverbindung zwischen Vermessungsgerät und Markiereinheit besteht.

In einer erfindungsgemässen Markieranordnung kann die Markiereinheit eine Datenschnittstelle, insbesondere verkörpert durch Funkmodul, Bluetooth-Schnittstelle, Infrarot-Schnittstelle und/oder Com-Port, zur Steuerung und/oder zum Informationsaustausch mit einer auto-mobilen, unbemannten, fernsteuerbaren Zieleinheit, insbesondere einem Fluggerät, aufweisen. Die Datenschnittstelle kann dazu dienen die Markiereinheit mit einer Zieleinheit zu verbinden und damit eine variable Positionierung, insbesondere eine automatische und/oder steuerbare Positionierung, der Markiereinheit bereitstellen. Über die Datenschnittstelle können beliebige Informationen zwischen den beiden Komponenten ausgetauscht werden und dadurch beispielsweise eine Rückmeldung für die Steuerung an einen Benutzer oder eine direkte Ansteuerung der Zieleinheit erfolgen.

Ein weiterer Gegenstand der Erfindung stellt ein erfindungsgemässes Computerprogrammprodukt, das auf einem maschinenlesbaren Träger gespeichert ist, oder Computer-Daten-Signal, verkörpert durch eine elektromagnetische Welle, mit Programmcode zur Durchführung eines erfindungsgemässen Verfahrens dar, insbesondere wenn das Programm in einer elektronischen Datenverarbeitungseinheit ausgeführt wird. Das Computerprogrammprodukt oder Computer-Daten-Signal kann derart gestaltet sein, dass darin Steuerungsanweisungen, insbesondere in Form von Algorithmen, vorgesehen sind, mit welchen ein erfindungsgemässes Verfahren zum Steuern eines mit geodätischer Genauigkeit erfolgenden Markierens eines bekannten Zielpunkts mit einer auto-mobilen, unbemannten, fernsteuerbaren Zieleinheit erfolgen kann.

Das erfindungsgemässe Verfahren, das erfindungsgemässe Markiersystem, die erfindungsgemässe Zieleinheit und die erfindungsgemässe Markieranordnung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein Markier- bzw. Vermessungssystem nach dem Stand der Technik;
- Fig. 2: ein erfindungsgemässes Markiersystem mit einer Vermessungsstation und einem als Zieleinheit ausgebildeten Fluggerät;
- Fig. 3: eine weitere Ausführungsform des erfindungsgemässen Markiersystems mit einem GNSS-System und einem als Zieleinheit ausgebildeten Fluggerät;
- Fig. 4: eine weitere Ausführungsform des erfindungsgemässen Markiersystems mit einem GNSS-System, einer GNSS-Referenzstation und einem als Zieleinheit ausgebildeten Fluggerät;
- Fig. 5: eine Ausführungsform einer erfindungsgemässen Zieleinheit;
- Fig. 6: einen erfindungsgemässen Bewegungspfad für eine erfindungsgemässe Zieleinheit;
- Fig. 7: eine erfindungsgemässe Bestimmung der Ausrichtung einer Markierrichtung.

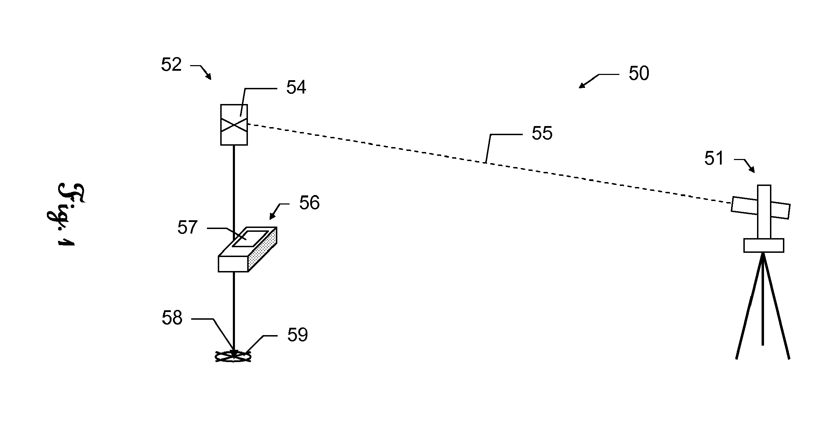

Figur 1 zeigt ein Vermessungssystem 50 nach dem Stand der Technik. Das System 50 weist dabei ein Vermessungsgerät 51 und einen Vermessungsstab 52 auf. An dem Vermessungsstab 52 sind weiterhin ein Reflektor 54, ein an den Stab 52 lösbar anbringbarer Controller 56 mit einem Display 57 und ein auf einen Punkt zulaufendes unteres Ende 58 vorgesehen. Eine Anzieleinrichtung des Vermessungsgeräts 51 kann einen Messstrahl 55 emittieren, mit welchem der Reflektor 54 angezielt und somit eine Entfernung vom Vermessungsgerät zum Vermessungsstab bestimmt werden kann. Ausserdem kann ein Vermessungsgerät 51 nach dem Stand der Technik über Winkelmesser verfügen, mittels derer eine Ausrichtung des Vermessungsgeräts 51 erfassbar ist. Somit kann eine relative Position, d.h. eine Positionsbestimmung in einem inneren Koordinatensystem des Vermessungsgeräts 51, des Vermessungsstabes 52 zum Vermessungsgerät 51 eindeutig, unter Berücksichtigung der Ausrichtung und der Entfernung, bestimmt werden. Für eine Bestimmung einer Absolutposition, d.h. einer Position in einem äusseren Koordinatensystem, kann nach einem Aufstellen des Vermessungsgeräts 51 dieses in eine Umgebung eingemessen und damit die absolute Position der Vermessungsvorrichtung 51 bestimmt werden. Ein derartiges Einmessen kann beispielsweise durch ein Anmessen bereits bekannter Zielpunkte in der Messumgebung erfolgen. Durch eine Verknüpfung des äusseren Koordinatensystems, in das die Vorrichtung 51 eingemessen wurde, mit dem inneren Koordinatensystem der Vermessungsvorrichtung 51 kann nun eine absolute Positionsbestimmung eines beliebeigen mit dem Vermessungsgerät 51 erfassten bzw. angezielten Punkt durchgeführt werden. Insbesondere zur Erleichterung eines Anzielens durch einen Bediener kann das Vermessungsgerät 51 eine Kamera aufweisen, mit der ein Bild der Messumgebung, insbesondere in Richtung der Anzielrichtung, erfasst werden kann. Ein so erzeugtes Kamerabild kann beispielsweise vermessungsgeräteseitig oder auf dem Display 57 des Controllers 56 angezeigt werden.

Ein derartiges Vermessungssystem 50 kann beispielsweise zur Vermessung von Objekten eingesetzt werden. Hierfür kann der Vermessungsstab 52 an einem Punkt 59 an dem zu vermessenden Objekt von einem Benutzer platziert und vertikal ausgerichtet werden. In dieser Positionierung kann dann der Reflektor 54 vom Vermessungsgerät 51 angezielt werden und seine Position bestimmt werden. Unter Berücksichtigung der Länge des Stabes 52 kann dadurch eindeutig und exakt die Position des Punktes 59 berechnet und dessen Koordinaten bestimmt werden.

Eine weitere Verwendung des Vermessungssystems 50 stellt die Markierung von bereits bekannten Zielpunkten 59 dar. Hierbei können die Punktkoordinaten im System 50 gespeichert sein, wobei ein Benutzer durch das Führen und Platzieren des Vermessungsstabs 52 auf dem Zielpunkt 59 den Zielpunkt 59 auffinden und anschliessend markieren kann. Nach dem aktuellen Stand der Technik kann dieser Markiervorgang von einem Benutzer insbesondere dann allein ausgeführt werden, wenn der Benutzer gleichzeitig den Vermessungsstab 52 führen und eine Information über die aktuelle Position des Vermessungsstabs und die Zielpunktposition erhalten kann. Dies kann durch eine Funkverbindung zwischen dem Controller 56 und dem Vermessungsgerät 51 realisiert werden. So kann fortlaufend die Position der Stange 52 bzw. des Reflektors 54 bestimmt und an den Controller 56 übermittelt werden. Durch einen Vergleich dieser Position mit einer gespeicherten Zielpunktposition - wiederum unter Einberechnung der Länge der Stabes 52 - kann der Benutzer sich so an den gesuchten Zielpunkt herantasten bzw. führen lassen. Ist der Zielpunkt 59 erreicht, kann dieser z.B. mittels eines Pfahls oder mittels Sprühfarbe markiert werden.

Das Vermessungsgerät 51 kann zur Erleichterung des Absteckprozesses auf den Reflektor 54 des Vermessungsstabs 52 insbesondere automatisch ausgerichtet und an diesen "angekoppelt" werden, sodass eine automatische Zielverfolgung des Stabs 52 erfolgen kann. Eine derartige Zielverfolgung kann mittels einer in das Vermessungsgerät 51 integrierten automatischen Zielerkennungsvorrichtung (Automated Target Recognition, ATR) realisiert werden. Hierfür kann die Abweichung eines von dem Reflektor 54 reflektierten Laserstrahls von einer Nullposition auf einer Photodiode derart erfasst werden, dass aus der Abweichung eine Bewegungsrichtung des Reflektors 54 relativ zum Vermessungsgerät 51 abgeleitet werden kann und das Vermessungsgeräts 51 dieser Bewegung entsprechend nachgeführt bzw. die Ausrichtung des Vermessungsgeräts 51 auf den Reflektor 54 nachgestellt werden kann, sodass die Abweichung auf der Photodiode minimiert wird.

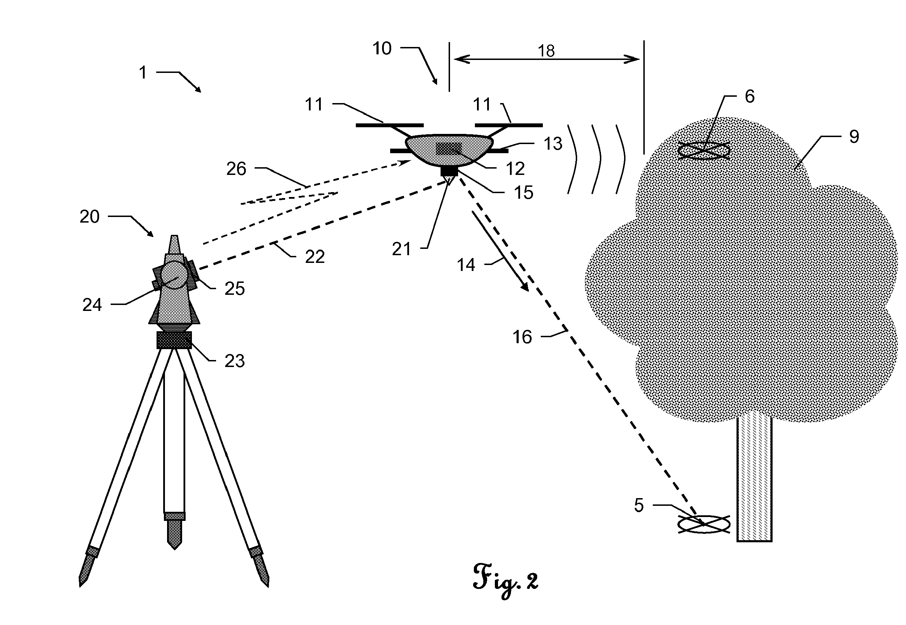

In Figur 2 ist ein erfindungsgemässes Markiersystem 1 mit einem Fluggerät, welches die erfindungsgemässe Zieleinheit 10 des Systems 1 darstellt, und einer Vermessungsstation 20 gezeigt, wobei die Vermessungsstation 20 die Positionsbestimmungsanordnung verkörpert. Das Fluggerät verfügt über zwei Antriebseinheiten 11, insbesondere Rotoren, die eine zumindest vorübergehende, weitestgehend ortsfeste Positionierung des Fluggeräts in einer definierten Position erlauben, wobei die Positionierung vertikal über einem definierten Punkt schwebend erfolgen kann. Je nach Ansteuerung der Antriebseinheiten 11 kann das Fluggerät ausgerichtet und/oder in eine Richtung bewegt bzw. eine Bewegungsrichtung geändert werden. Weiters weist die Zieleinheit 10 eine Sensoreinheit 12 auf, wobei die Sensoreinheit 12 über ein Magnetometer, einen mindestens zweiachsigen Neigungssensor, Beschleunigungssensoren und/oder ein Gyroskop verfügen kann. Die Sensoreinheit 12 kann somit eine Bestimmung einer Neigung bzw. einer Ausrichtung der Zieleinheit 10 bereitstellen. Zusätzlich dazu sind Sensoren zur Abstandsmessung 7 zu Objekten 9, insbesondere Hindernissen, vorgesehen, um bei einer automatisierten Bewegung des Fluggeräts eine Kollision mit einem solchen Hindernis zu verhindern und diese Objekte 9, insbesondere ebenfalls automatisch, umgehen zu können bzw. das Fluggerät bis auf eine vordefinierte Distanz 18 an das Objekt 9 annähern zu können. Hierfür können beispielsweise Radar-, Ultraschall und/oder optische Sensoren, wie z.B. eine Kamera oder Laserscanner, vorgesehen sein. Durch solche Hindernisse kann weiterhin ein Erreichen einer Sollposition 6 mit der Zieleinheit 10 verhindert werden.

Die Zieleinheit 10 trägt ferner eine Markiereinheit 15 zur Markierung von Zielpunkten 5. Die Markiereinheit 15 kann hierzu beispielsweise eine Laserstrahlquelle zur Emission optisch sichtbarer Laserstrahlung 16 parallel, insbesondere koaxial, zu einer Markierrichtung 14 aufweisen. Die Ausrichtung der Markierrichtung 14 bzw. des Laserstrahls 16 kann mittels der Markiereinheit 15 zugeordneten Ausrichtmittel erfolgen. Zur Ausrichtung können z.B. Stellmotoren, die ein Schwenken der Markiereinheit 15 durchführbar machen, oder Spiegel, mit denen eine Auslenkung des Laserstrahls 16 erfolgen kann, vorgesehen sein. Die Ausrichtung bzw. Auslenkung kann dabei zumindest in zwei Achsen, insbesondere in drei Achsen erfolgen, sodass nicht nur eine punktuelle Markierung des Zielpunkts 5, sondern auch eine Markierung mit einem Muster oder einer alternativen zweidimensionalen optischen Marke erfolgen kann. Zur besseren Wahrnehmung der Markierung durch einen Benutzer des Systems 1 kann die Laserstrahlung auch gepulst emittiert werden. Insbesondere kann die Laserstrahlung 16 oder eine durch eine zusätzlich optische Strahlungsquelle erzeugte Strahlung zur Messung einer Entfernung zu einem Objekt bzw. zum Zielpunkt 5 verwendet werden.

Die Ausrichtung der Markierrichtung 14 in Richtung des Zielpunkts 5 kann durch eine Steuereinheit des Markiersystems 1 gesteuert werden. Für eine zielgenaue Ausrichtung kann die Position der Zieleinheit 10 bestimmt und zur Berechnung der Ausrichtung berücksichtigt werden. Die Positionsbestimmung kann in einer Ausführungsform durch ein Anzielen eines an der Zieleinheit 10 angeordneten Reflektors 21 durch eine Vermessungsstation 20 - wie aus dem Stand der Technik bekannt - erfolgen. Ein Messstrahl 22 kann dabei auf den Reflektor 21 gerichtet, der reflektierte Strahl vom Vermessungsgerät detektiert und daraus die Entfernung der Zieleinheit 10 vom Vermessungsgerät 20 bestimmt werden. Mittels jeweils eines Winkelmessers in der schwenkbaren Basis 23 und der schwenkbaren Aufhängung 24 der Anzieleinrichtung 25 kann in Folge eine exakte Position der Zieleinheit 15 relativ zum Vermessungsgerät 20 und bei Verknüpfung des inneren Koordinatensystems des Vermessungsgerät 20 mit einem äusseren Koordinatensystem eine absolute Position der Zieleinheit 10 bestimmt werden.

Die Vermessungsstation 20 kann wiederum auf den Reflektor 21 der Zieleinheit 10 insbesondere automatisch ausgerichtet und an diesen "angekoppelt" werden, sodass eine automatische Zielverfolgung des Reflektors 21 bzw. der Zieleinheit 10 erfolgen kann. Eine derartige Zielverfolgung kann gemäss des Standes der Technik mittels einer in die Vermessungsstation 20 integrierten automatischen Zielerkennungsvorrichtung (Automated Target Recognition, ATR) realisiert werden. Hierfür kann die Abweichung eines von dem Reflektor 21 reflektierten Messstrahls 22 von einer Nullposition auf einer Photodiode derart erfasst werden, dass aus der Abweichung eine Bewegungsrichtung des Reflektors 21 relativ zur Vermessungsstation 20 abgeleitet werden kann und die Vermessungsstation 20 dieser Bewegung entsprechend nachgeführt bzw. die Ausrichtung die Vermessungsstation 20 auf den Reflektor 21 nachgestellt werden kann, sodass die Abweichung auf der Photodiode minimiert wird.

Die generierten Positionsinformationen können in der Vermessungsstation 20 in Steuersignale zur Steuerung des Fluggeräts 10 umgesetzt und beispielsweise mittels Funksignalen 26 oder mittels eines Laserstrahls, insbesondere als dem Laserstrahl aufmodulierte Information, an das Fluggerät 10 übertragen werden. Alternativ oder zusätzlich können auch die Positionsinformationen an das Fluggerät 10 gesendet und dort zur Steuerung des Geräts 10 weiterverarbeitet werden.

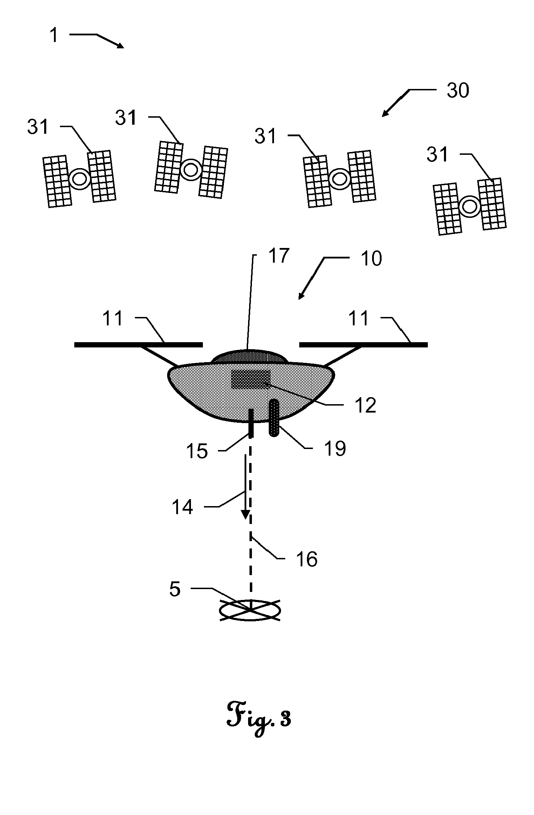

Figur 3 zeigt eine weitere Ausführungsform eines erfindungsgemässen Markiersystems 1 mit einer erfindungsgemässen Zieleinheit 10 und einem GNSS-System 30 als Positionsbestimmungsanordnung. Das GNSS-System kann dabei durch eine Anzahl von Satelliten 31 verkörpert sein, die jeweils Signale zur Positionsbestimmung der Zieleinheit 10 aussenden. Korrespondierend dazu ist an der Zieleinheit 10 ein GNSS-Empfänger 17 angeordnet, mit dem von den Satelliten 31 ausgesendeten Signale empfangen werden können. Aus diesen Signalen wiederum kann auf Seiten der Zieleinheit 10 eine Positionsbestimmung durchgeführt werden und entsprechend eine geodätisch genaue Position für die Zieleinheit 10 ermittelt werden. Ferner kann die Zieleinheit 10 über Antriebseinheiten 11 zur Bewegung der Zieleinheit 10, über eine Sensoreinheit 12 zur Bestimmung der Ausrichtung der Zieleinheit 10 und über eine Erfassungseinheit 19, insbesondere eine Videokamera, verfügen. Die Sensoreinheit 12 kann zur Verbesserung der Positionierung der Zieleinheit 10 beispielsweise dadurch beitragen, dass mit einem Beschleunigungssensor kleinste Änderungen in der Position erfasst werden können und basierend auf dieser Erfassung eine Gegensteuerung der Zieleinheit 10 erfolgen kann. Mittels der Kamera 19 kann ein Bild oder eine Bildsequenz einer Messumgebung erfasst, gespeichert und/oder über einen Sender zu einer Fernsteuerung der Zieleinheit 10 übermittelt und auf einem Display dargestellt werden. Weiterhin kann durch Bildverarbeitung einer Bildfolge eine Bewegung bzw. ein Pfad, entlang dessen sich die Zieleinheit 10 bewegt, abgeleitet werden.

Zur Markierung eines Zielpunkts 5 ist an der Zieleinheit 10 eine Markiereinheit 15 angeordnet, wobei die Markierrichtung 14 der Markiereinheit 15 im Wesentlichen parallel zum Erdgravitationsfeld gerichtet ist. Diese Ausrichtung kann durch eine kardanische Aufhängung der Markiereinheit 15 realisiert sein und somit eine stetige automatische derartige Ausrichtung gewährleisten. Wird die Zieleinheit 10 vertikal über einem zu markierenden Zielpunkt 5 positioniert, so kann die Markierung des Zielpunkts 5 aufgrund dieser Aufhängung allein durch eine Aktivierung der bzw. ein aktive Markiereinheit 15 erfolgen. Insbesondere kann die Markiereinheit 15 durch eine Laserstrahlquelle, die Laserstrahlung 16 im visuell wahrnehmbaren Wellenlängenbereich emittiert, verkörpert sein, wobei die Steuerung bzw. Aktivierung der Strahlquelle durch eine Steuerungseinheit unter Berücksichtigung der Positionierung des Fluggeräts erfolgen kann. Die Strahlung kann dabei kontinuierlich oder gepulst emittiert werden.

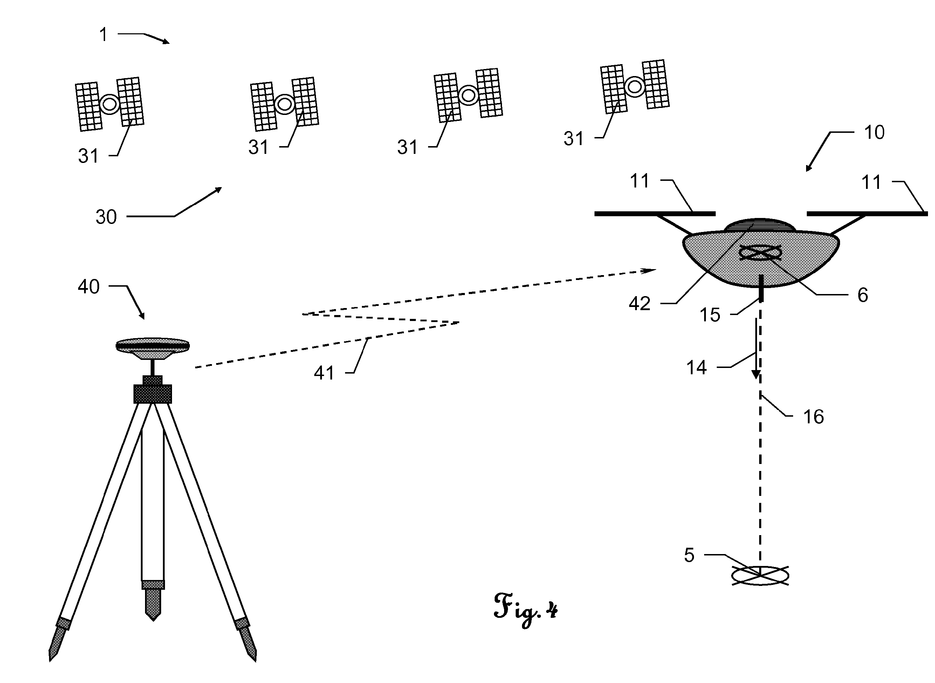

Eine Kombination der Ausführungsform aus Figur 3 mit einer GNSS-Referenzstation 40 wird in Figur 4 gezeigt. Die von den Satelliten 31 des GNSS-Systems 30 ausgesendeten GNSS-Signale werden hierbei zusammen mit von der Referenzstation 40 bereitgestellten GNSS-Korrektursignalen 41 an einer Empfangseinheit 42 an der Zieleinheit 10 empfangen und weiterverarbeitet. Aus den Signalen kann eine Positionsbestimmung erfolgen, die eine höhere Genauigkeit gegenüber einer nur mit GNSS-Signalen erfolgten Positionsbestimmung aufweist.

Die Markierung des Zielpunkts 5 mit einem derartigen erfindungsgemässen Markiersystem 1 kann ebenfalls analog zu dem für Figur 3 beschriebenen Markiervorgang erfolgen. Durch die Rotoren 11 kann das Fluggerät vertikal über einem Zielpunkt 5 in einer Sollposition 6 positioniert werden. Die Markiereinheit 15 kann derart kardanisch aufgehängt sein, dass die Markierrichtung 14 der aktivierten Markiereinheit 15 automatisch auf den Zielpunkt 5 ausgerichtet ist und diesen beispielsweise mit einem Laserstrahl 16 markiert.

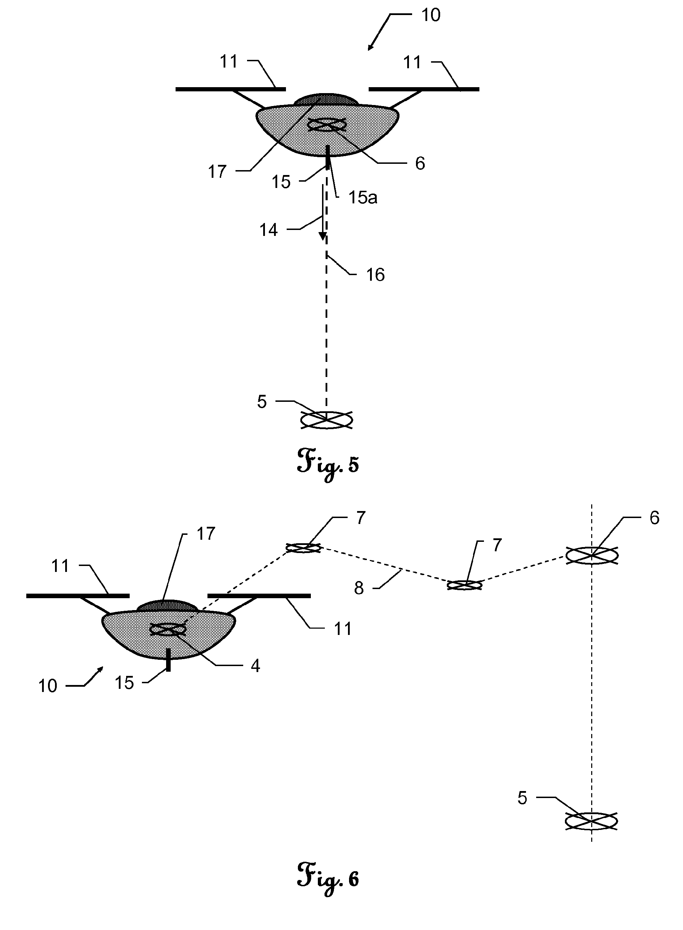

Figur 5 zeigt eine erfindungsgemässe Zieleinheit 10 verkörpert durch ein Fluggerät, z.B. eine Drohne mit vier Antriebseinheiten 11, insbesondere Rotoren, einem Empfangsmodul 17 und einer Markiereinheit 15, wobei die Markiereinheit 15 modular abnehmbar an dem Fluggerät 10 befestigt ist. Die Rotoren 11 können derart angesteuert werden, dass durch eine jeweilige Ausrichtung und/oder eine jeweils individuell justierbare Rotationsgeschwindigkeit eine schwebende Positionierung des Fluggeräts an einem beliebigen Punkt, beispielsweise an einer Sollposition 6, positionierbar ist. Die Sollposition 6 kann sich dabei typischerweise vertikal, d.h. in paralleler Richtung zum Gravitationsfeld der Erde, über einem zu markierenden Zielpunkt 5 befinden. Das Empfangsmodul 17 kann z.B. zum Empfang von GNSS-Signalen, GNSS-Korrektursignalen und/oder Funksignalen ausgebildet sein, um einen Positionsbestimmung der Zieleinheit 10 durchführbar zu machen. Die Positionsbestimmung der Zieleinheit 10 kann ferner mittels einer Vermessungsstation, deren Anzieleinheit die Zieleinheit 10 bzw. einen an der Zieleinheit 10 angeordneten Reflektor anmessen und verfolgen und so eine Entfernung und Winkel zu der Einheit 10 ermitteln kann, erfolgen. Die so ableitbaren Positions- und Steuerungsinformationen können an die Zieleinheit 10 gesendet und dort durch das Empfangsmodul 17 empfangen werden.

Weiters kann die Markiereinheit 15 zur Markierung des Zielpunkts 5 eine Laserstrahlquelle zur Emission eines den Zielpunkt 5 markierenden, optisch sichtbaren Laserstrahls 16 und/oder andere Markiermittel, z.B. eine Sprühvorrichtung zum Markieren des Punktes 5 mittels Versprühen einer Markierfarbe, aufweisen. Eine Markierrichtung 14 der Markiereinheit 15, je nach Ausführung beispielsweise die Emissionsrichtung der Laserstrahlung 16 und/oder eine Sprührichtung der Sprühvorrichtung, kann bei einer kardanischen Aufhängung der Markiereinheit 15 stets parallel zur Lotrichtung gerichtet sein. Alternativ oder zusätzlich können Ausrichtemittel zur Ausrichtung der Markierrichtung 14, insbesondere definiert ausrichtbare Spiegel, oder zur Ausrichtung der Markiereinheit 15, insbesondere Stellmotoren, in einem definierten Winkel zum Gravitationsfeld bzw. Gravitationsvektor vorgesehen sein. Dabei kann ein Schwenken der Markierrichtung 14 bzw. der Markiereinheit 15 in bis zu drei Achsen erfolgen. Darüber hinaus kann die Zieleinheit 10 über eine Vorrichtung zur Entfernungsmessung 15a zu einem Objekt, insbesondere zum Zielpunkt 5, verfügen. Die Entfernungsmessvorrichtung 15a kann wiederum über weitere Ausrichtemittel, insbesondere in drei Achsen, auf einen zu vermessenden Punkt ausgerichtet werden. Alternativ kann eine Entfernungsmessung mittels des Laserstahls 16 zur Markierung durchführbar sein.

Mittels einer zusätzlich an der Zieleinheit 10 angeordneten Erfassungseinheit, z.B. einer Kamera, kann ein Bild oder eine Bildsequenz einer Messumgebung erfasst, gespeichert und/oder über einen Sender zu einer Fernsteuerung der Zieleinheit 10 übermittelt und dort auf einem Display dargestellt werden. Dieses Bild kann einem Benutzer die Steuerung des Fluggeräts erleichtern oder eine genaue Positionierung ermöglichen. Weiterhin kann durch Bildverarbeitung einer Bilderfolge eine Bewegung bzw. ein Pfad, entlang dessen sich die Zieleinheit 10 bewegt, abgeleitet werden.

In Figur 6 ist die erfindungsgemässe Zieleinheit 10 aus

Figur 5 gezeigt, wobei weiters ein Positionierungsablauf zum Erreichen einer Sollposition 6 mit der Zieleinheit 10 dargestellt ist. Die Zieleinheit 10 befindet sich hier an einer aktuellen Istposition 4. In Abhängigkeit der Istposition 4 und einer bekannten Position des Zielpunkt 5 kann die Zieleinheit 10 in einer Sollposition 6 positionierbar sein. Eine Steuerung der Bewegung der Zieleinheit 10 hin zu dieser Sollposition 6 kann mittels der Rotoren 11 erfolgen, wobei hierfür Signale von dem Empfangsmodul 17 empfangen werden. Zur Markierung des Zielpunkts 5 ist wiederum die Markiereinheit 15 vorgesehen.

Ausserdem können weitere Wegpunkte 7 vorbestimmt sein und/oder, insbesondere automatisch, aus einem Geländemodell bestimmt werden, entlang derer sich die Zieleinheit 10 bewegen kann. Zudem kann das Geländemodell Informationen über das Gelände, wie beispielsweise ein Geländebewuchs und/oder Positionen und Abmessungen von Gebäuden, aus einer geodätische Informationen aufweisenden Datenbank aufweisen. Somit kann ein Pfad 8, insbesondere eine Flugbahn, für eine Fortbewegung der Zieleinheit 10 derart definiert sein, dass bereits bekannte Hindernisse in der Bewegungsumgebung berücksichtigt und umfahren bzw. umflogen werden können.

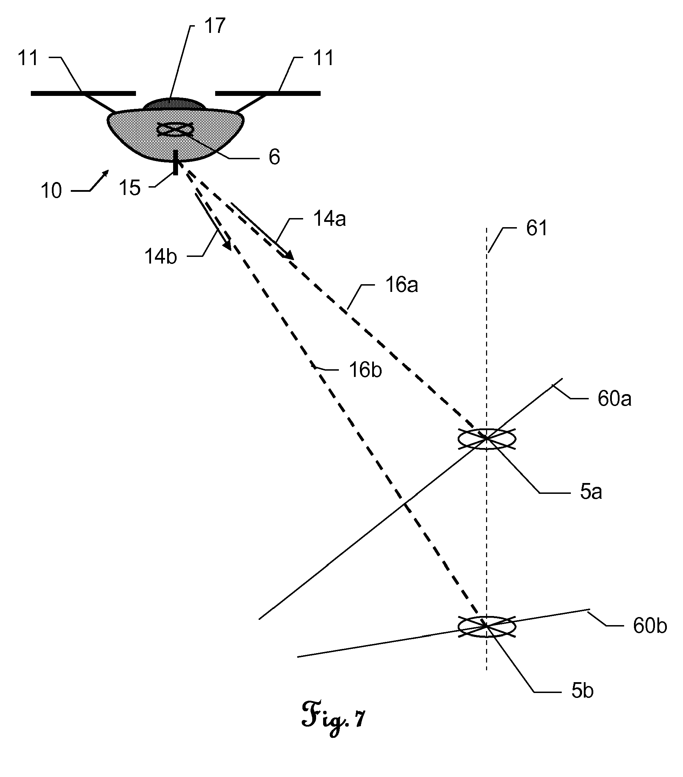

Figur 7 zeigt eine erfindungsgemässe Bestimmung der Ausrichtung der durch die Laserstrahlen 16a,16b repräsentierten Markierrichtung 14a,14b der Markiereinheit 15 der Zieleinheit 10. Die Zieleinheit 10 ist hierbei bereits - gesteuert durch die mit dem Empfangsmodul 17 empfangenen Signale und durch die Rotoren 11 - schwebend in einer Sollposition 6 positioniert. Sind die Koordinaten der Position des Zielpunkts 5a,5b in drei Dimensionen bekannt, so können die Ausrichtwinkel für die Markierrichtung 14a,14b aus der Sollposition 6 und der Ausrichtung der Zieleinheit 10 und der Zielpunktposition 5a,5b berechnet werden. Sind hingegen nur die horizontalen Koordinaten des Zielpunkts 5a,5b bekannt, so kann aus dieser Information eine eindeutige Bestimmung der Ausrichtung der Markierrichtung 14a,14b nicht erfolgen. In diesem Fall kann zusätzlich ein digitales Geländemodell zur Berechnung herangezogen werden. Hierbei können Geländeoberflächen 60a,60b mit einer die horizontale Position definierende vertikalen Achse 60 geschnitten und aus den Schnittpunkten die Zielpunktpositionen 5a,5b ermittelt werden. Eine Ausrichtung der Laserstrahlung 16a,16b kann dann unter Berücksichtigung der Zielpunktpositionen 5a,5b erfolgen. Alternativ oder zusätzlich zur Überprüfung der Ausrichtung kann ein Abstand mittels einer an der Zieleinheit 10 angeordneten Entfernungsmessvorrichtung zum markierten Zielpunkt 5a,5b gemessen werden. Aus der bekannten Position der Zieleinheit 10 und dem gemessenen Abstand bei bekannter Ausrichtung der Markierrichtung 14a,14b kann somit eine korrekte Markierung des Zielpunkts 5a,5b überprüft werden. Weiterhin kann, falls nur die horizontale Position des Zielpunkts bekannt ist, eine, insbesondere automatisch iterative, Suche der zu markierenden Zielpunktposition 5a,5b erfolgen. Dabei kann der Zielpunkt 5a,5b bzw. die vertikale Position des Punkts 5a,5b durch einen Schnitt der vertikal verlaufenden Achse 61 und der Laserstrahlung 16a,16b unter Berücksichtigung einer berechneten Sollentfernung, die in Abhängigkeit eines Winkels zwischen Markierrichtung 14a,14b und vertikaler Achse 61 bestimmbar ist, von Zieleinheit 10 zum Zielpunkt 5a,5b bestimmt werden.

Es versteht sich, dass diese dargestellten Figuren nur mögliche Ausführungsbeispiele schematisch darstellen. Die verschiedenen Ansätze können erfindungsgemäss ebenso miteinander sowie mit Systemen und Verfahren zum Markieren von Objekten oder Zielpunkten des Stands der Technik kombiniert werden.

## Patentansprüche

1. Geodätisches Markiersystem (1) zur Markierung eines bekannten Zielpunkts (5,5a,5b) mit einer auto-mobilen, unbemannten, fernsteuerbaren Zieleinheit (10), insbesondere einem Fluggerät, und mit einer geodätischen Positionsbestimmungsanordnung (20,30,40) zur äusseren Istpositionsbestimmung der Zieleinheit (10), wobei die Zieleinheit (10) derart ausgebildet ist, dass die Zieleinheit (10) zumindest vorübergehend weitestgehend positionsfest, insbesondere schwebend, positionierbar ist,
**dadurch gekennzeichnet, dass**
• die Zieleinheit (10) eine, insbesondere modulartig abnehmbare, Markiereinheit (15) zur Markierung des Zielpunkts (5,5a,5b) trägt und
• das Markiersystem (1) eine Steuereinheit aufweist, wobei die Steuereinheit derart konfiguriert ist, dass
□ in Abhängigkeit der, insbesondere fortlaufend bestimmbaren, äusseren Istposition (4) und einer bekannten Zielpunktposition des Zielpunkts (5,5a,5b) die Zieleinheit (10) in einer definierten Sollposition (6), insbesondere in einem definierten Toleranzbereich um die Sollposition (6), relativ zur Zielpunktposition, insbesondere fortlaufend, automatisch gesteuert positionierbar ist, und
□ unter Berücksichtigung der Istposition (4), der Sollposition (6) und einer definierten Markierrichtung (14,14a,14b) von der Markiereinheit (15) zum Zielpunkt (5,5a,5b) die Markiereinheit (15) zur Markierung des Zielpunkts (5,5a,5b) steuerbar ist, sodass der Zielpunkt (5,5a,5b) in der definierten Markierrichtung (14,14a,14b) mit geodätischer Genauigkeit markierbar ist.

2. Markiersystem (1) nach Anspruch 1
**dadurch gekennzeichnet, dass**
• die Positionsbestimmungsanordnung (20,30,40) mindestens eine Sendeeinheit zur Aussendung von Positionierungssignalen aufweist und
• die Zieleinheit (10) derart ausgebildet ist, dass die Positionierungssignale, insbesondere mittels einer GNSS-Antenne, empfangbar und die Istposition (4) der Zieleinheit (10) aus den Positionierungssignalen bestimmbar sind,
insbesondere wobei
• die Sendeeinheit als GNSS-Sender, insbesondere GNSS-Satellit (31), insbesondere GPS-, GLONASS- oder Galileo-Satellit, ausgebildet ist und die Positionierungssignal durch GNSS-Signale verkörpert sind oder
• die Sendeeinheit ein Pseudo-Satelliten-Modul aufweist und die Positionierungssignal durch Pseudo-Satelliten-Signale verkörpert sind,
insbesondere wobei
• die Positionsbestimmungsanordnung (20,30,40) eine GNSS-Referenzstation (40) zur Aussendung von GNSS-Korrektursignalen (41) aufweist und
• die Zieleinheit (10) derart ausgebildet ist, dass die GNSS-Korrektursignale (41) empfangbar und die Istposition (4) der Zieleinheit (10) aus den empfangenen GNSS-Signalen und den GNSS-Korrektursignalen (41) bestimmbar ist.

3. Markiersystem (1) nach einem der Ansprüche 1 oder 2 **dadurch gekennzeichnet, dass**
• die Zieleinheit (10) einen Reflektor (21) aufweist,
• die Positionsbestimmungsanordnung (20,30,40) ein geodätisches Vermessungsgerät (20), insbesondere Theodolit oder Totalstation, aufweist mit mindestens
□ einer Anzieleinrichtung (25), insbesondere Ziel-Fernrohr, wobei die Anzieleinrichtung (25) gegenüber einer Basis (23) des Vermessungsgeräts zur Änderung deren Ausrichtung, insbesondere motorisiert, schwenkbar ist und zumindest aufweist
· eine eine optische Zielachse definierende Emissionseinheit und
· eine Strahlungsquelle zur Emission eines optischen Messstrahls (22) zur Entfernungsmessung parallel, insbesondere koaxial, zur optische Zielachse,
□ Winkelmessfunktionalität zur hochpräzisen Erfassung der Ausrichtung der Zielachse, und
□ Auswertemitteln zur Datenspeicherung und Steuerung der Ausrichtung der Anzieleinrichtung, und
• der Messstrahl (22) auf den Reflektor (21) ausrichtbar ist, sodass die Istposition (4) der Zieleinheit (10) bestimmbar ist,
insbesondere wobei
• ein zu der Zieleinheit (10) übermittelbares Signal, insbesondere wobei das Signal verkörpert ist durch ein Funksignal, ein einem Laserstrahl aufmoduliertes Signal oder elektronisches Signal, aufweist
□ eine Positionsinformation, wobei die Positionsinformation in einer ersten der Zieleinheit (10) zugeordneten Verarbeitungseinheit in Steuerungsdaten umsetzbar ist, oder
□ die Steuerungsdaten, wobei die Steuerungsdaten mittels einer zweiten dem Vermessungsgerät (20) zugeordneten Verarbeitungseinheit aus der Positionsinformation ermittelbar sind.

4. Markiersystem (1) nach einem der Ansprüche 1 bis 3 **dadurch gekennzeichnet, dass**
die Zieleinheit (10) eine Sensoreinheit (12) zur Bestimmung einer Ausrichtung und/oder der Istposition der Zieleinheit (10) aufweist, insbesondere einen Neigungssensor, ein Magnetometer, einen Beschleunigungssensor, einen Drehratensensor und/oder einen Geschwindigkeitssensor,
und/oder
die Zieleinheit (10) eine die Ausrichtung der Zieleinheit (10) angebende Komponente aufweist und das Markiersystem (1) eine Erfassungsvorrichtung, insbesondere Kamera, zur Erfassung und/oder Anzielung der Komponente und zur Bestimmung der Ausrichtung der Zieleinheit (10) aus der Lage und Anordnung der Komponente aufweist,
und/oder
die Zieleinheit (10) zumindest vorübergehend weitestgehend horizontal positionsfest schwebend positionierbar ist, insbesondere wobei eine Einwirkung auf die Positionierung durch äussere Einflüsse, insbesondere Luftströmung, Druck- und/oder Temperaturschwankung, in vertikaler Richtung ausgleichbar ist,
und/oder
das Markiersystem (1) eine Fernsteuereinheit zur Steuerung der Zieleinheit (10) aufweist, insbesondere wobei die Fernsteuereinheit ein Display zur Darstellung von Information aufweist.

5. Verfahren zum Steuern eines mit geodätischer Genauigkeit erfolgenden Markierens eines bekannten Zielpunkts (5,5a,5b) mit einer auto-mobilen, unbemannten, fernsteuerbaren Zieleinheit (10), insbesondere einem Fluggerät, wobei eine äussere Istposition (4) der Zieleinheit (10), insbesondere fortlaufend, bestimmt wird,
**dadurch gekennzeichnet, dass**
• die Zieleinheit (10) eine, insbesondere modulartig abnehmbare, Markiereinheit (15) zum Markieren des Zielpunkts (5,5a,5b) trägt und
• in Abhängigkeit der, insbesondere fortlaufend bestimmten, äusseren Istposition (4) und einer bekannten Zielpunktposition des Zielpunkts (5,5a,5b) die Zieleinheit (10) in einer definierten Sollposition (6), insbesondere in einem definierten Toleranzbereich um die Sollposition (6), relativ zur Zielpunktposition, insbesondere fortlaufend, automatisch gesteuert positioniert wird und
• unter Berücksichtigen der Istposition (4), der Sollposition (6) und einer definierten Markierrichtung (14,14a,14b) von der Markiereinheit (15) zum Zielpunkt (5,5a,5b) die Markiereinheit (15) zur Markierung des Zielpunkts (5,5a,5b) gesteuert wird, sodass der Zielpunkt (5,5a,5b) in der definierten Markierrichtung (14,14a,14b) mit geodätischer Genauigkeit markiert wird.

6. Verfahren zum Steuern des Markierens nach Anspruch 5 **dadurch gekennzeichne**t, dass
im Rahmen des Verfahrens Positionierungssignale von der Zieleinheit (10) empfangen und die äussere Istposition (4), insbesondere eine Ausrichtung der Zieleinheit (10), aus den Positionierungssignalen bestimmt wird,
insbesondere wobei
die Positionierungssignale durch GNSS-Signale, Pseudo-Satelliten-Signale und/oder GNSS-Korrektursignale verkörpert werden und die Istposition (4) aus den GNSS-Signalen und/oder den GNSS-ähnlichen Signalen, insbesondere unter Berücksichtigen der GNSS-Korrektursignale, bestimmt wird, und/oder ein Messstrahl (22) zieleinheitsseitig reflektiert wird und die äussere Istposition (4) mittels des reflektierten Messstrahls (22) bestimmt wird.

7. Verfahren zum Steuern des Markierens nach einem der Ansprüche 5 oder 6
**dadurch gekennzeichnet, dass**
die Ausrichtung der Zieleinheit (10), insbesondere in Nick-, Roll- und Gierrichtung, und/oder ein Abstand zu einem Objekt, insbesondere zu einem Hindernis, bestimmt werden,
und/oder ein Bild, insbesondere wobei das Bild den Zielpunkt (5,5a,5b) aufweist, erfasst wird und/oder das Markieren des Zielpunkts (5,5a,5b) mit optisch sichtbarer Strahlung (16,16a,16b) erfolgt und eine Strahlungsrichtung der Strahlung parallel, insbesondere koaxial, zur Markierrichtung (14,14a,14b) liegt,
und/oder die Markierrichtung (14,14a,14b) der Markiereinheit (15) parallel, insbesondere selbsttätig, zur Lotrichtung und/oder definiert relativ zur Ausrichtung der Zieleinheit (10) ausgerichtet wird, insbesondere wobei die Markiereinheit (15) kardanisch aufgehängt ist und/oder die Zieleinheit (10) Ausrichtmittel zum definierten Ausrichten der Markierrichtung (14,14a,14b) aufweist, insbesondere wobei die Markiereinheit (15) in zwei, insbesondere in drei, Achsen geschwenkt wird.

8. Verfahren zum Steuern des Markierens nach einem der Ansprüche 5 bis 7
**dadurch gekennzeichnet, dass**
im Rahmen des Verfahrens ein Pfad (8) durch Wegpunkte (7) definiert wird, wobei die Zieleinheit (10) entlang des Pfads (8) bewegt wird, insbesondere wobei ein Optimieren eines Pfadverlaufs, insbesondere automatisch, erfolgt und/oder der Pfad (8) den Zielpunkt (5,5a,5b) und/oder die Sollposition (6) aufweist, und/oder ein Markieren der Position der Wegpunkte (7) als Zwischenzielpunkte fortlaufend entlang des Pfads (8) erfolgt,
und/oder Informationen und/oder Steuerbefehle, insbesondere die Zielpunktposition, in die Zieleinheit (10) eingegeben werden, und/oder Informationen, insbesondere das erfasste Bild, insbesondere auf einem Display, ausgegeben werden.

9. Auto-mobile, unbemannte, fernsteuerbare Zieleinheit (10), insbesondere Fluggerät, insbesondere eine Drohne, zur Verwendung in einem Markiersystem (1) nach einem der Ansprüche 1 bis 4 wobei
• die Zieleinheit (10) derart ausgebildet ist, dass die Zieleinheit (10) zumindest vorübergehend weitestgehend positionsfest, insbesondere schwebend, positionierbar ist und
• Positionsinformationen zur Bestimmung einer äusseren Istposition (4) der Zieleinheit (10) und zur Erzeugung von Steuerungsdaten und/oder die Steuerungsdaten direkt zur Zieleinheit (10) übermittelbar sind,
**dadurch gekennzeichnet, dass**
• die Zieleinheit (10) eine Markiereinheit (15) zur Markierung eines Zielpunkts (5,5a,5b) trägt, insbesondere wobei die Markiereinheit (15) modulartig abnehmbare ausgeführt ist, und
• die Steuerungsdaten derart ausgestaltet sind, dass
□ in Abhängigkeit der, insbesondere fortlaufend bestimmbaren, äusseren Istposition (4) und einer bekannten Zielpunktposition des Zielpunkts (5,5a,5b) die Zieleinheit (10) in einer definierten Sollposition (6), insbesondere in einem definierten Toleranzbereich um die Sollposition (6), relativ zur Zielpunktposition, insbesondere fortlaufend, automatisch gesteuert positionierbar ist, und
□ unter Berücksichtigung der Istposition (4), der Sollposition (6) und einer definierten Markierrichtung (14,14a,14b) von der Markiereinheit (15) zum Zielpunkt (5,5a,5b) die Markiereinheit (15) zur Markierung des Zielpunkts (5,5a,5b) steuerbar ist, sodass der Zielpunkt (5,5a,5b) in der definierten Markierrichtung (14,14a,14b) mit geodätischer Genauigkeit markierbar ist.

10. Zieleinheit (10) nach Anspruch 9 zur Verwendung in einem Markiersystem (1) nach einem der Ansprüche 1 bis 4
**dadurch gekennzeichnet, dass**
die Zieleinheit (10) einen Empfänger (17,42) für Positionierungssignale, insbesondere eine GNSS-Antenne, und eine Verarbeitungseinheit zur Bestimmung einer Istposition (4) der Zieleinheit (10) aus den Positionierungssignalen aufweist,
insbesondere wobei
die Positionierungssignale durch GNSS-Signale, insbesondere wobei die GNSS-Signale repräsentiert werden durch GPS-, GLONASS- oder Galileo-Signale, Pseudo-Satelliten-Signale und/oder GNSS-Korrektursignale verkörpert sind und die Istposition (4) aus den GNSS-Signalen und/oder den GNSS-ähnlichen Signalen, insbesondere unter Berücksichtigung der GNSS-Korrektursignale, bestimmbar ist, und/oder
die Zieleinheit (10) einen Reflektor (21) aufweist.

11. Zieleinheit (10) nach einem der Ansprüche 9 oder 10 zur Verwendung in einem Markiersystem (1) nach einem der Ansprüche 1 bis 4
**dadurch gekennzeichnet, dass**
die Zieleinheit (10) eine Sensoreinheit (12) zur Bestimmung einer Ausrichtung und/oder der Istposition der Zieleinheit (10) aufweist, insbesondere einen Neigungssensor, ein Magnetometer, einen Beschleunigungssensor, einen Drehratensensor und/oder einen Geschwindigkeitssensor,
und/oder die Zieleinheit (10) einen Sensor zur Abstandsmessung (13) zu Objekten, insbesondere Radar, aufweist,
und/oder die Zieleinheit eine optische Erfassungseinheit (19), insbesondere Kamera, zur Erfassung eines Bildes aufweist, insbesondere wobei das Bild den Zielpunkt (5,5a,5b) aufweist,
und/oder die Zieleinheit (10) zur definierten Ausrichtung, insbesondere selbsttätig parallelen Ausrichtung zur Lotrichtung, der
Markierrichtung (14,14a,14b) eine kardanische Aufhängung und/oder Ausrichtmittel für die Markiereinheit (15) aufweist, insbesondere wobei die Markiereinheit (15) in zwei, insbesondere in drei, Achsen schwenkbar ist,
und/oder die Markiereinheit (15) eine Strahlquelle zur Emission optisch sichtbarer Strahlung (16,16a,16b) aufweist und die Strahlquelle derart angeordnet ist, dass eine Emissionsrichtung der optischen Strahlung parallel, insbesondere koaxial, zur
Markierrichtung (14,14a,14b) verläuft,
und/oder
die Zieleinheit (10) eine Eingabeeinheit, insbesondere Tastatur, berührungssensitives Display und/oder Datenschnittstelle, zur Eingabe von Information und/oder Steuerbefehlen, insbesondere der Zielpunktposition aufweist,
und/oder die Zieleinheit (10) eine Ausgabeeinheit, insbesondere Display, zur Ausgabe von Information aufweist, insbesondere des von der Kamera erfassten Bildes,
und/oder die Zieleinheit (10) eine Fernsteuereinheit zur Steuerung der Zieleinheit (10), insbesondere wobei die Fernsteuereinheit ein Display zur Darstellung von Information und/oder des von der Kamera erfassten Bildes aufweist, aufweist.

12. Markieranordnung zur Markierung eines bekannten Zielpunkts (5,5a,5b) und zur Verwendung in einem Markiersystem (1) nach einem der Ansprüche 1 bis 4 mit einer fernsteuerbaren Markiereinheit (15) und einer geodätischen Positionsbestimmungsanordnung (20,30,40), insbesondere Theodolit oder Totalstation, zur äusseren Positionsbestimmung der Markiereinheit (15), wobei eine äussere Istposition (4) der Markiereinheit (15), insbesondere fortlaufend, mittels der Positionsbestimmungsanordnung (20,30,40) bestimmbar ist,
**dadurch gekennzeichnet, dass**
die Markieranordnung eine Steuereinheit aufweist, wobei die Steuereinheit derart konfiguriert ist, dass
• in Abhängigkeit der, insbesondere fortlaufend bestimmbaren, äusseren Istposition (4) und einer bekannten Zielpunktposition des Zielpunkts (5,5a,5b) die Zieleinheit (10) in einer definierten Sollposition (6), insbesondere in einem definierten Toleranzbereich um die Sollposition (6), relativ zur Zielpunktposition, insbesondere fortlaufend, positionierbar ist und
• unter Berücksichtigung der Istposition (4), der Sollposition (6) und einer definierten Markierrichtung (14,14a,14b) von der Markiereinheit (15) zum Zielpunkt die Markiereinheit steuerbar ist, sodass der Zielpunkt (5,5a,5b) in der definierten Markierrichtung (14,14a,14b) mit geodätischer Genauigkeit markierbar ist.

13. Markieranordnung zur Markierung eines bekannten Zielpunkts (5,5a,5b) nach Anspruch 12 zur Verwendung in einem Markiersystem (1) nach einem der Ansprüche 1 bis 4
**dadurch gekennzeichnet, dass**
• die Positionsbestimmungsanordnung (20,30,40) mindestens eine Sendeeinheit zur Aussendung von Positionierungssignalen aufweist und
• die Markiereinheit (15) derart ausgebildet ist, dass die Positionierungssignale, insbesondere mittels einer GNSS-Antenne, empfangbar und die Istposition (4) der Markiereinheit (15) aus den Positionierungssignalen bestimmbar sind, insbesondere wobei
• die Sendeeinheit als GNSS-Sender, insbesondere GNSS-Satellit (31), insbesondere GPS-, GLONASS- oder Galileo-Satellit, ausgebildet ist und die Positionierungssignale durch GNSS-Signale verkörpert sind oder
• die Sendeeinheit ein Pseudo-Satelliten-Modul aufweist und die Positionierungssignale durch Pseudo-Satelliten-Signale verkörpert sind,
insbesondere wobei
• die Positionsbestimmungsanordnung (20,30,40) eine GNSS-Referenzstation (40) zur Aussendung von GNSS-Korrektursignalen (41) aufweist und
• die Markiereinheit (15) derart ausgebildet ist, dass die GNSS-Korrektursignale (41) empfangbar und die Istposition (4) der Markiereinheit (15) aus den empfangenen GNSS-Signalen und den GNSS-Korrektursignalen (41) bestimmbar sind,
und/oder
die Positionsbestimmungsanordnung (20,30,40) ein geodätisches Vermessungsgerät (20), insbesondere Theodolit oder Totalstation, aufweist, wobei die Position der Markiereinheit (15) durch einen Reflektor (21) im Raum hochpräzise angegeben wird, mit mindestens
• einer Anzieleinrichtung (25), insbesondere Ziel-Fernrohr, wobei die Anzieleinrichtung (25) gegenüber einer Basis (23) des Vermessungsgeräts (20) zur Änderung deren Ausrichtung, insbesondere motorisiert, schwenkbar ist und zumindest aufweist
□ eine eine optische Zielachse definierende Emissionseinheit und
□ eine Strahlungsquelle zur Emission eines optischen Messstrahls (22) parallel, insbesondere koaxial, zur optische Zielachse zur Entfernungsmessung,
• Winkelmessfunktionalität zur hochpräzisen Erfassung der Ausrichtung der Zielachse, und
• Auswertemitteln zur Datenspeicherung und Steuerung der Ausrichtung der Anzieleinrichtung,
und wobei
der Messstrahl (22) auf den Reflektor (21) ausrichtbar ist, sodass die Istposition (4) der Markiereinheit (15) bestimmbar ist.

14. Markieranordnung zur Markierung eines bekannten Zielpunkts (5,5a,5b) nach einem der Ansprüche 12 oder 13 zur Verwendung in einem Markiersystem (1) nach einem der Ansprüche 1 bis 4
**dadurch gekennzeichnet, dass**
die Markiereinheit (15) eine Datenschnittstelle, insbesondere verkörpert durch Funkmodul, Bluetooth-Schnittstelle, Infrarot-Schnittstelle und/oder Com-Port, zur Steuerung und/oder zum Informationsaustausch mit einer auto-mobilen, unbemannten, fernsteuerbaren Zieleinheit (10), insbesondere einem Fluggerät, aufweist.

15. Computerprogrammprodukt, das auf einem maschinenlesbaren Träger gespeichert ist, oder Computer-Daten-Signal, verkörpert durch eine elektromagnetische Welle, mit Programmcode zur Durchführung des Verfahrens nach einem der Ansprüche 5 bis 8, insbesondere wenn das Programm in einer elektronischen Datenverarbeitungseinheit ausgeführt wird.
